(19) **Europäisches Patentamt / European Patent Office / Office européen des brevets**

(11) **EP 4 697 174 A1**

(12) **EUROPEAN PATENT APPLICATION**
published in accordance with Art. 153(4) EPC

(43) Date of publication:
**18.02.2026 Bulletin 2026/08**

(21) Application number: **23936444.1**

(22) Date of filing: **04.12.2023**

(51) International Patent Classification (IPC):
*G06F 11/14* (2026.01)

(52) Cooperative Patent Classification (CPC):
**G06F 11/14; G06F 16/27; G06F 21/62; H04L 9/40**

(86) International application number:
**PCT/CN2023/136149**

(87) International publication number:
**WO 2024/230140 (14.11.2024 Gazette 2024/46)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.05.2023 CN 202310524887
19.07.2023 CN 202310889759**

(71) Applicants:
• **Huawei Cloud Computing Technologies Co., Ltd.
Guiyang, Guizhou 550025 (CN)**
• **Tsinghua University
Beijing 100084 (CN)**

(72) Inventors:
• **DU, Mingxiao
Guiyang, Guizhou 550025 (CN)**
• **QIN, Xuanmei
Beijing 100084 (CN)**
• **BAI, Minhao
Beijing 100084 (CN)**
• **HUANG, Yongfeng
Beijing 100084 (CN)**

(74) Representative: **Thun, Clemens
Mitscherlich PartmbB
Patent- und Rechtsanwälte
Karlstraße 7
80333 München (DE)**

(54) **DATA MANAGEMENT METHOD AND RELATED DEVICE**

(57) This application provides a data management method, and the method includes: A client receives a backup plan configured by a user for to-be-backed-up data; the client divides the to-be-backed-up data into c data blocks based on a quantity of cloud nodes used for backup and a quantity of backup copies, and stores the c data blocks in n cloud nodes on multi-cloud platforms in a distributed manner, where for at least one data block in the c data blocks, the multi-cloud platforms store b backup copies of the at least one data block; and the client provides, for a blockchain network, metadata of the data stored on the multi-cloud platforms, so that the blockchain network encodes the metadata into a backup identifier, and stores the backup identifier, where the backup identifier is used to address the data stored on the multi-cloud platforms. In this method, cloud-chain convergence is performed with reference to features of the blockchain network of being decentralized, secure, and reliable, to improve security of multi-cloud backup data and eliminate a single-point security bottleneck in a conventional method.

Multi-cloud platforms 200 — Client 100 — Blockchain network 300

Receive a backup plan configured by a user for to-be-backed-up data — S202

Divide the to-be-backed-up data into c data blocks based on a quantity n of cloud nodes used for backup and a quantity b of backup copies — S204

S206: Store the c data blocks in n cloud nodes on the multi-cloud platforms in a distributed manner

S208: Provide, for the blockchain network 300, metadata of the data stored on the multi-cloud platforms 200, so that the blockchain network 300 encodes the metadata into a backup identifier, and stores the backup identifier

FIG. 2

**Description**

This application claims priority to Chinese Patent Application No. 202310524887.3, filed with the China National Intellectual Property Administration on May 10, 2023 and entitled "DATA MANAGEMENT METHOD AND RELATED DEVICE", and to Chinese Patent Application No. 202310889759.9, filed with the China National Intellectual Property Administration on July 19, 2023 and entitled "DATA MANAGEMENT METHOD AND RELATED DEVICE", which are incorporated herein by reference in their entireties.

**TECHNICAL FIELD**

This application relates to the field of cloud computing technologies, and in particular, to a data management method, a data management system, a computing device cluster, a computer-readable storage medium, and a computer program product.

**BACKGROUND**

With in-depth application and development of cloud computing in various industries, more individual users, enterprises, and organizations use cloud storage-based data disaster recovery and backup solutions, effectively reducing difficulty and costs of building and maintaining data disaster recovery systems. Compared with conventional backup and recovery technologies, cloud-based disaster recovery and backup does not require deployment of a large quantity of infrastructures, supports on-demand subscription and elastic scaling, and is compatible with backups of databases, files, virtualization platforms, operating systems, and physical environments, having advantages such as low investment costs, high scalability and strong compatibility.

Relying on a single cloud platform introduces a single-point bottleneck. Once the cloud platform is faulty or completely collapses, a large amount of data is lost, threatening data security and storage reliability. Considering this, more users choose to back up data on a plurality of cloud platforms (also briefly referred to as multi-cloud platforms), to reduce a risk incurred by a failure of a single cloud platform.

How to perform unified management on the data on the multi-cloud platforms becomes a major concern in the industry.

**SUMMARY**

This application provides a data management method. In the method, cloud-chain convergence is implemented with reference to features of a blockchain network of being decentralized, secure, and reliable, to improve security of multi-cloud backup data. This application further provides a data management system corresponding to the method, a computing device cluster, a computer-readable storage medium, and a computer program product.

According to a first aspect, this application provides a data management method. The method may be performed by a data management system. The data management system includes a client, multi-cloud platforms, and a blockchain network. The data management system is configured to manage data on the multi-cloud platforms.

Specifically, the client receives a backup plan configured by a user for to-be-backed-up data, where the backup plan includes a quantity n of cloud nodes used for backup on the multi-cloud platforms and a quantity b of backup copies. Then, the client divides the to-be-backed-up data into c data blocks based on the quantity n of cloud nodes used for backup and the quantity b of backup copies, and stores the c data blocks in n cloud nodes on the multi-cloud platforms in a distributed manner. For at least one data block in the c data blocks, the multi-cloud platforms store b backup copies of the at least one data block. The client provides, for the blockchain network, metadata (also referred to as backup metadata) of the data stored on the multi-cloud platforms, so that the blockchain network encodes the metadata into a backup identifier, and stores the backup identifier. The backup identifier is used to address the data stored on the multi-cloud platforms.

In the method, the to-be-backed-up data is divided into blocks and then stored on the multi-cloud platforms in a distributed manner, and the metadata of the to-be-backed-up data is provided for the blockchain network for unified encoding, to obtain a globally unique backup identifier. The backup identifier on the chain is used to record and manage the backup data on the multi-cloud platforms, and unified positioning and addressing of the backup data on the multi-cloud platforms are performed, so that distributed management of multi-cloud backup data is implemented. In this method, cloud-chain convergence is performed with reference to features of the blockchain network of being decentralized, secure, and reliable, to improve security of multi-cloud backup data and eliminate a single-point security bottleneck in a conventional method.

In some possible implementations, the backup identifier may include a short identifier and a long identifier. The short identifier may include a data identifier, and the long identifier may include a storage address of the data on the multi-cloud platforms. The blockchain network may receive the short identifier provided by the user, search, based on the short identifier, for the long identifier corresponding to the short identifier, parse the long identifier to obtain the storage address of the data on the multi-cloud platforms, and return the storage address of the data on the multi-cloud platforms.

In the method, the backup identifier is determined through combination of the short identifier and the long identifier. In this way, the user can implement data query based on the short identifier, to reduce operation complexity of the user. In addition, the blockchain network determines the storage address of the data based on the long identifier corresponding to the short identifier, to improve data query efficiency and accuracy.

In some possible implementations, the backup identifier includes a first short identifier, a first long identifier, a second short identifier, and a second long identifier, the first short identifier includes the data identifier, the first long identifier includes a version set, the second short identifier includes the data identifier and a target version in the version set, and the second long identifier includes a storage address of the data of the target version on the multi-cloud platforms.

In this method, considering that the backup data on the multi-cloud platforms may have a plurality of versions, the version of the data is added to the backup identifier, so that the data of a plurality of time versions is recorded and managed based on the backup identifier on the chain, to support unified positioning and addressing of the backup data on the multi-cloud platforms, so that distributed management of multi-cloud backup data is implemented.

In some possible implementations, the blockchain network may obtain status parameters of cloud nodes on the multi-cloud platforms, obtain weights of the cloud nodes on the multi-cloud platforms based on the status parameters, and return, to the client, node identifiers of the n cloud nodes whose weights meet a requirement.

According to the method, the weights of the cloud nodes are obtained based on the status parameters of the cloud nodes, to determine the n cloud nodes used to store data in a distributed manner. In this way, scheduling of the multi-cloud platforms is implemented, and efficient management of the data on the multi-cloud platforms is implemented.

In some possible implementations, the status parameter may include one or more of a node bandwidth, a node cost, a node remaining storage capacity, and node reputation information. In the method, the status parameter may include static parameters (the node bandwidth and the node cost) that are basically fixed after a cloud service is subscribed to and dynamic parameters (the node remaining storage capacity and the node reputation information) whose values can be dynamically adjusted. In this way, as data is backed up on the multi-cloud platforms, a smart contract is updated.

In some possible implementations, the node reputation information may include a node reputation value. The node reputation value may be dynamically adjusted as a multi-cloud status parameter update contract is triggered by a backup operation. For example, the node reputation value may be dynamically adjusted based on an audit result. A larger quantity of audit successes indicates a higher node reputation value (trustworthiness) of the cloud node, and a larger quantity of audit failures indicates a lower node reputation value (trustworthiness) of the cloud node.

In some possible implementations, before calculating the weights of the cloud nodes on the multi-cloud platforms, the blockchain network may perform normalization processing on the status parameters of the cloud nodes. A proper normalization function is selected to process a parameter vector, so that comparability between different parameters can be enhanced. Then, an impact coefficient of each parameter is determined according to a proper method (for example, an entropy weight method), and impact of each parameter on the weight is processed based on a difference degree of each parameter. In this way, reliability of multi-cloud scheduling calculation and flexibility of a scheduling strategy can be improved.

In some possible implementations, the blockchain network may check consistency between an actual storage address of the data on the multi-cloud platforms and the storage address recorded in the backup identifier stored in the blockchain network. If the actual storage address of the data on the multi-cloud platforms and the storage address recorded in the backup identifier stored in the blockchain network are inconsistent, the blockchain network may recover the data on the multi-cloud platforms based on the storage address recorded in the backup identifier.

In this method, considering a case of inconsistency caused by deleting a file or a directory by an operation and maintenance personnel of a cloud service provider by mistake after data backup is completed, a consistency verification mechanism is set, so that the case of inconsistency caused by the operation of deleting by mistake can be detected in a timely manner, and recovery can be performed in a timely manner.

In some possible implementations, the client may create a backup storage transaction, and execute the backup storage transaction, to perform the transaction operation of storing the c data blocks in the n cloud nodes on the multi-cloud platforms in the distributed manner and the transaction operation of providing, for the blockchain network, the metadata of the data stored on the multi-cloud platforms.

In this method, a concept of a transaction is introduced, and the transaction may be defined as backing up data in the data management system. The backup storage transaction is executed, to implement backup data storage. This ensures consistency of a cloud chain before and after the backup data storage, and improves security of multi-cloud backup data.

In some possible implementations, the client may obtain incremental data; and create a backup update transaction, and execute the backup update transaction, to perform a transaction operation of storing the incremental data on the multi-cloud platforms and a transaction operation of updating the backup identifier.

In this method, a concept of a transaction is introduced, and the transaction may be defined as performing an incremental update on data in the data management system. The backup update transaction is executed, to implement a backup incremental update. This ensures consistency of a cloud chain before and after the incremental update, and improves security of multi-cloud backup data.

In some possible implementations, the client may create a backup deletion transaction in response to a deletion operation, and execute the backup deletion transaction, to perform a transaction operation of deleting data corresponding to a specified data identifier and a transaction operation of deleting a backup identifier corresponding to the specified data identifier.

In this method, a concept of a transaction is introduced, and the transaction may be defined as deleting data in the data management system. The backup deletion transaction is executed, to implement backup data deletion. This ensures consistency of a cloud chain before and after the backup data deletion, and improves security of multi-cloud backup data.

In some possible implementations, the client may implement consistency and atomicity of backup, update, and deletion transactions based on a retry and rollback mechanism. For example, in a process of storing the to-be-backed-up data on the multi-cloud platforms, when the transaction fails to be executed due to an abnormal network of a cloud platform, the client may perform retry and rollback. For another example, in a process of storing the incremental data on the multi-cloud platforms, when the transaction fails to be executed due to an abnormal network of a cloud platform, the client may perform rollback and retry. For still another example, in a process of deleting the data corresponding to the specified data identifier from the multi-cloud platforms, when the transaction fails to be executed due to an abnormal network of a cloud platform, a deletion failure location may be returned, and the backup identifier in the blockchain network may be updated.

In some possible implementations, a quantity of data blocks into which the to-be-backed-up data is divided is equal to C(n, n-q+1). The client may generate a scheduling allocation table based on the quantity of data blocks into which the to-be-backed-up data is divided, where the scheduling allocation table records the data blocks to be stored in the n cloud nodes, and then store the c data blocks in the n cloud nodes on the multi-cloud platforms in the distributed manner based on the scheduling allocation table.

In this method, scheduling of a backup resource is implemented with reference to the idea of secret splitting (also referred to as threshold secret splitting), and when a backup data block in any corresponding range is faulty, data can still be completely recovered, so that robustness of data backup is improved. In addition, cloud nodes participating in backup are of completely same importance. Impact caused by collapse of a plurality of nodes is related to a quantity of collapsed nodes, and there is no special node or a node of extraordinary importance, so that a truly decentralized scheduling strategy is implemented.

According to a second aspect, this application provides a data management system. The system includes a client, multi-cloud platforms, and a blockchain network, and the system is configured to manage data on the multi-cloud platforms;

the client is configured to receive a backup plan configured by a user for to-be-backed-up data, where the backup plan includes a quantity n of cloud nodes used for backup on the multi-cloud platforms and a quantity b of backup copies;

the client is further configured to: divide the to-be-backed-up data into c data blocks based on the quantity of cloud nodes used for backup and the quantity of backup copies, and store the c data blocks in n cloud nodes on the multi-cloud platforms in a distributed manner, where for at least one data block in the c data blocks, the multi-cloud platforms store b backup copies of the at least one data block; and

the client is further configured to provide, for the blockchain network, metadata of the data stored on the multi-cloud platforms, so that the blockchain network encodes the metadata into a backup identifier, and stores the backup identifier, where the backup identifier is used to address the data stored on the multi-cloud platforms.

In some possible implementations, the backup identifier includes a short identifier and a long identifier, the short identifier includes a data identifier, the long identifier includes a storage address of the data on the multi-cloud platforms, and the blockchain network is configured to:

receive the short identifier provided by the user; and

search, based on the short identifier, for the long identifier corresponding to the short identifier, parse the long identifier to obtain the storage address of the data on the multi-cloud platforms, and return the storage address of the data on the multi-cloud platforms.

In some possible implementations, the backup identifier includes a first short identifier, a first long identifier, a second short identifier, and a second long identifier, the first short identifier includes the data identifier, the first long identifier includes a version set, the second short identifier includes the data identifier and a target version in the version set, and the second long identifier includes a storage address of the data of the target version on the multi-cloud platforms.

In some possible implementations, the blockchain network is further configured to:

obtain status parameters of cloud nodes on the multi-cloud platforms;

obtain weights of the cloud nodes on the multi-cloud platforms based on the status parameters; and

return, to the client, node identifiers of the n cloud nodes whose weights meet a requirement.

In some possible implementations, the status parameter includes one or more of a node bandwidth, a node cost, a node remaining storage capacity, and node reputation information.

In some possible implementations, the blockchain network is further configured to:

check consistency between an actual storage address of the data on the multi-cloud platforms and the storage address recorded in the backup identifier stored in the blockchain network; and

if the actual storage address of the data on the multi-cloud platforms and the storage address recorded in the backup identifier stored in the blockchain network are inconsistent, recover the data on the multi-cloud platforms based on the storage address recorded in the backup identifier.

In some possible implementations, the client is further configured to:

create a backup storage transaction; and

execute the backup storage transaction, to perform the transaction operation of storing the c data blocks in the n cloud nodes on the multi-cloud platforms in the distributed manner and the transaction operation of providing, for the blockchain network, the metadata of the data stored on the multi-cloud platforms.

In some possible implementations, the client is further configured to:

obtain incremental data; and

create a backup update transaction, and execute the backup update transaction, to perform a transaction operation of storing the incremental data on the multi-cloud platforms and a transaction operation of updating the backup identifier.

In some possible implementations, the client is further configured to:

create a backup deletion transaction in response to a deletion operation; and

execute the backup deletion transaction, to perform a transaction operation of deleting data corresponding to a specified data identifier and a transaction operation of deleting a backup identifier corresponding to the specified data identifier.

In some possible implementations, a quantity of data blocks into which the to-be-backed-up data is divided is equal to $C(n, n-q+1)$, and the client is specifically configured to:

generate a scheduling allocation table based on the quantity of data blocks into which the to-be-backed-up data is divided, where the scheduling allocation table records the data blocks to be stored in the n cloud nodes; and

store the c data blocks in the n cloud nodes on the multi-cloud platforms in the distributed manner based on the scheduling allocation table.

According to a third aspect, this application provides a computing device cluster. The computing device cluster includes at least one computing device, and the at least one computing device includes at least one processor and at least one memory. The at least one processor and the at least one memory communicate with each other. The at least one processor is configured to execute instructions stored in the at least one memory, to enable the computing device or the computing device cluster to perform the data management method according to the first aspect or any one of the implementations of the first aspect.

According to a fourth aspect, this application provides a computer-readable storage medium. The computer-readable storage medium stores instructions. The instructions instruct a computing device or a computing device cluster to perform the data management method according to the first aspect or any one of the implementations of the first aspect.

According to a fifth aspect, this application provides a computer program product that includes instructions. When the computer program product is run on a computing device or a computing device cluster, the computing device or the computing device cluster is enabled to perform the data management method according to the first aspect or any one of the implementations of the first aspect.

In this application, on the basis of the implementations according to the foregoing aspects, the implementations may be further combined to provide more implementations.

## BRIEF DESCRIPTION OF DRAWINGS

To describe the technical methods in embodiments of this application more clearly, the following briefly describes the accompanying drawings for describing embodiments.

FIG. 1 is a diagram of an architecture of a data management system according to an embodiment of this application;
FIG. 2 is a flowchart of a data management method according to an embodiment of this application;
FIG. 3 is a diagram of an interface of a backup configuration interface according to an embodiment of this application;
FIG. 4 is a diagram of a backup identifier according to an embodiment of this application;
FIG. 5 is a flowchart of operations of a backup storage transaction, a backup update transaction, and a backup deletion transaction according to an embodiment of this application;
FIG. 6 is a schematic flowchart of a data management method according to an embodiment of this application;
FIG. 7 is a schematic flowchart of a data management method according to an embodiment of this application;
FIG. 8 is a schematic flowchart of a data management method according to an embodiment of this application;
FIG. 9 is a diagram of a structure of a computing device according to an embodiment of this application;
FIG. 10 is a diagram of a structure of a computing device cluster according to an embodiment of this application;
FIG. 11 is a diagram of a structure of another computing device cluster according to an embodiment of this application; and
FIG. 12 is a diagram of a structure of still another computer cluster according to an embodiment of this application.

## DESCRIPTION OF EMBODIMENTS

The terms "first" and "second" in embodiments of this application are merely intended for a purpose of description, and shall not be understood as an indication or implication of relative importance or implicit indication of a quantity of indicated technical features. Therefore, a feature limited by "first" or "second" may explicitly or implicitly include one or more features.

First, some technical terms in embodiments of this application are described.

Multi-cloud backup means backing up data by using multi-cloud platforms (namely, a plurality of cloud platforms, for example, cloud platforms constructed by different cloud service providers), where a plurality of backup copies of the data are stored on the multi-cloud platforms. Further, when data of the backup copy on a specific cloud platform is lost, for example, is deleted or tampered with, the backup copy may be obtained from another cloud platform in the multi-cloud platforms for recovery. This process is also referred to as multi-cloud recovery. In this way, a single-point bottleneck exists in data backup on a single cloud platform, and consequently, once the cloud platform is faulty or completely collapses, a large amount of data is lost, threatening data security and storage reliability can be resolved.

Considering that difficulty of multi-cloud backup and recovery management is large, the industry provides a multi-cloud unified management platform to implement multi-cloud backup management, disaster backup and recovery, and automatic verification. Specifically, the multi-cloud unified management platform is a fault-tolerant parallel application scheduling architecture, and monitors, negotiates, and manages resources of cloud service providers by using a third-party resource negotiation layer (third party resources negotiation layer). This method relies on a trusted third-party platform (namely, the multi-cloud unified management platform) to manage resources between a user and the cloud service provider. Because information resources are highly centralized, the third-party platform faces a multi-dimensional network attack, and especially an administrator and the third-party platform have extremely high access permission on data and resources, and can modify and delete the data.

In view of this, this application provides a distributed data management method based on a blockchain technology. The method may be applied to a data management system. The data management system includes a client, multi-cloud platforms, and a blockchain network. The data management system is configured to manage data on the multi-cloud platforms. For example, the data management system may back up the data on the multi-cloud platforms.

Specifically, the client receives a backup plan configured by a user for to-be-backed-up data, where the backup plan includes a quantity n of cloud nodes used for backup on the multi-cloud platforms and a quantity b of backup copies. Then, the client divides the to-be-backed-up data into c data blocks based on the quantity n of cloud nodes used for backup and the quantity b of backup copies, and stores the c data blocks in n cloud nodes on the multi-cloud platforms in a distributed manner. For at least one data block in the c data blocks, the multi-cloud platforms store b backup copies of the at least one data block. The client provides, for the blockchain network, metadata (also referred to as backup metadata) of the data stored on the multi-cloud platforms, so that the blockchain network encodes the metadata into a backup identifier, and stores the backup identifier. The backup identifier is used to address the data stored on the multi-cloud platforms.

In the method, the to-be-backed-up data is divided into blocks and then stored on the multi-cloud platforms in a distributed manner, and the metadata of the to-be-backed-up data is provided for the blockchain network for unified encoding, to obtain a globally unique backup identifier. The backup identifier on the chain is used to record and manage the backup data on the multi-cloud platforms, and unified positioning and addressing of the backup data on the multi-cloud platforms are performed, so that distributed management of multi-cloud backup data is implemented. In this method, cloud-chain convergence is performed with reference to features of the blockchain network of being decentralized, secure, and reliable, to improve security of multi-cloud backup data and eliminate a single-point security bottleneck in a conventional method.

To make the technical solutions of this application clearer and easier to understand, the following describes a system architecture of this application with reference to the accompanying drawings.

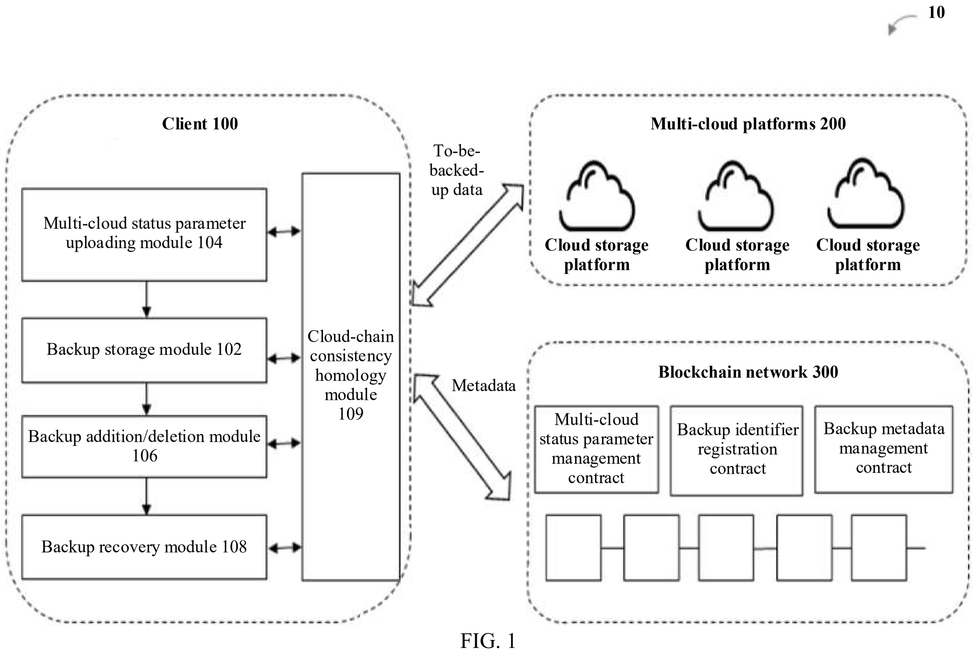

FIG. 1 is a diagram of an architecture of a data management system. As shown in FIG. 1, a data management system 10 includes a client 100, multi-cloud platforms 200, and a blockchain network 300. The client 100 separately establishes a communication connection to the multi-cloud platforms 200 and the blockchain network 300. A connection manner may be wired communication, or a wireless communication manner such as a cellular network or Wi-Fi.

The client 100 may be a program that provides a local service for a user, or a terminal on which the foregoing program is deployed, and includes but is not limited to a desktop computer, a notebook computer, a smartphone, or an intelligent wearable device. The user may execute a consistency maintenance protocol by using the client (or a terminal) to implement management, including but not limited to storage, recovery, an incremental update, and deletion, of data and metadata on the multi-cloud platforms 200 and the blockchain network 300. When the user wants to back up data, the user uploads and stores the data to the remote multi-cloud platforms 200 by using the client 100. When locally stored data is damaged, and the data needs to be recovered from the multi-cloud platforms 200, the user may obtain, by using the client 100, a backup identifier from the blockchain network 300, and obtain, based on the backup identifier, a data copy stored on the multi-cloud platforms 200.

The multi-cloud platforms 200 include a plurality of types of cloud platforms constructed by cloud service providers, and provide various types of computing and storage resources, for example, cloud computing and storage, and edge computing and storage. FIG. 1 is described by using an example in which the multi-cloud platforms 200 include a plurality of cloud platforms that provide cloud storage resources. The user may subscribe to cloud services from a plurality of cloud service providers in advance, so that different resources are combined to form multi-cloud platforms that complement advantages of the different resources.

The blockchain network 300 includes a plurality of blockchain nodes, and the plurality of blockchain nodes collaboratively store, manage, and maintain backup data. In some possible implementations, the client 100 and the multi-cloud platforms 200 (for example, a cloud node on the multi-cloud platforms 200) may also be used as different types of blockchain nodes to jointly construct the blockchain network 300. The client 100 may be a light node (or referred to as a light node), and the cloud node on the multi-cloud platforms 200 may be a full node (or referred to as a full node). The full node may initiate a transaction, receive a transaction, and participate in consensus. The light node may be connected to the full node and access through the full node. The blockchain network 300 in this application supports different underlying blockchain infrastructures, and has high flexibility. Different consensus mechanisms may be removed or inserted based on an application requirement. A smart contract is an important part of the blockchain network. In the system, a backup identifier registration contract and a backup metadata management contract are first deployed on the blockchain network, to store and update metadata in the blockchain network. A multi-cloud status parameter management contract (for example, a multi-cloud status parameter initialization contract or a multi-cloud status parameter update contract) may be further deployed on the blockchain network, to schedule the cloud node on the multi-cloud platforms 200.

During specific implementation, the client 100 is configured to receive a backup plan configured by the user for to-be-backed-up data, where the backup plan includes a quantity n of cloud nodes used for backup on the multi-cloud platforms 200 and a quantity b of backup copies, and then divide the to-be-backed-up data into c data blocks based on the quantity of cloud nodes used for backup and the quantity of backup copies, and store the c data blocks in n cloud nodes on the multi-cloud platforms in a distributed manner. For at least one data block in the c data blocks, the multi-cloud platforms 200 store b backup copies of the at least one data block. The client 100 is further configured to provide, for the blockchain network 300, metadata of the data stored on the multi-cloud platforms 200, so that the blockchain network 300 encodes the metadata into a backup identifier, and stores the backup identifier.

The backup identifier is used to address the data stored on the multi-cloud platforms 200. In some examples, the backup identifier includes a short identifier and a long identifier. The short identifier includes a data identifier (data identifier, DataID), and the long identifier includes a storage address of the data on the multi-cloud platforms 200. In this way, when the user provides the short identifier by using the client 100, the blockchain network 300 may search, based on the short identifier, for the long identifier corresponding to the short identifier, parse the long identifier to obtain the storage address of the data on the multi-cloud platforms 200, and return the storage address of the data on the multi-cloud platforms 200.

The following describes the client 100 from a perspective of function modularization.

The client 100 may include a backup storage module 102. The backup storage module 102 is configured to: undertake a storage task of the to-be-backed-up data, store the to-be-backed-up data on the multi-cloud platforms 200 based on a multi-cloud scheduling strategy, and store the metadata in the blockchain network 300. Specifically, the backup storage module 102 may divide the to-be-backed-up data into the c data blocks based on the quantity n of cloud nodes used for backup and the quantity b of backup copies that are configured by the user, store the c data blocks in the n cloud nodes on the multi-cloud platforms 200 in a distributed manner, and provide, for the blockchain network 300, the metadata (also referred to as backup metadata) of the data stored on the multi-cloud platforms 200, so that the blockchain network 300 encodes the metadata into the backup identifier and stores the backup identifier. The backup identifier is used to address the data stored on the multi-cloud platforms 200.

In some possible implementations, the client 100 may further include a multi-cloud status parameter uploading module 104. The multi-cloud status parameter uploading module 104 is configured to upload status parameters of cloud nodes on the multi-cloud platforms 200 to the blockchain network 300, so that the blockchain network 300 obtains weights of the cloud nodes on the multi-cloud platforms 200 based on the status parameters, and returns, to the client 100, identifiers of the n cloud nodes whose weights meet a requirement. For example, the multi-cloud status parameter uploading module 104 may upload initialization status parameters of a plurality of cloud nodes to the blockchain network 300, and the blockchain network 300 records the initialization status parameters to a blockchain ledger, to formulate a multi-cloud backup scheduling strategy. Further, after backup is completed, a global multi-cloud status parameter (for example, a status of the cloud node used for backup) usually changes. The changed multi-cloud status parameter may be submitted to the blockchain network 300, and the blockchain network 300 may record the changed multi-cloud status parameter in the blockchain ledger.

The client 100 further supports an incremental update, deletion, and recovery of the data. The following describes functional modules, such as a backup addition/deletion module 106 and a backup recovery module 108, that implement the corresponding functions by using examples.

The backup addition/deletion module 106 is configured to perform an incremental update or deletion on the data. That the backup addition/deletion module 106 performs an incremental update on the data may include the following steps: storing incremental data on the multi-cloud platforms 200, and updating the metadata in the backup identifier. For example, when the user needs to perform an incremental update on the data, the user may input the short identifier and the incremental data. The backup addition/deletion module 106 may store the incremental data on the multi-cloud platforms 200, and update a corresponding field in the long identifier. That the backup addition/deletion module 106 performs deletion on the data may include the following steps: deleting, from the multi-cloud platforms 200, the data copy corresponding to the backup identifier, and deleting the backup identifier from the blockchain network 300. For example, when the user needs to delete the data, the user may input the short identifier. The backup addition/deletion module 106 may query the corresponding long identifier based on the short identifier, delete the data from the multi-cloud platforms 200 based on the storage address of the data in the long identifier, and delete the short identifier and the long identifier from the blockchain network 300.

The backup recovery module 108 is configured to recover the data based on the backup identifier in the blockchain network 300 and backup copies stored on the multi-cloud platforms 200. Specifically, the backup recovery module 108 first queries, from the blockchain network 300, the storage address (storage locations) of the backup copies of the data on the multi-cloud platforms 200, and then downloads the backup copies from the corresponding locations on the multi-cloud platforms 200 to recover the data. The cloud-chain convergence solution in this application is applied, to avoid a problem of a single-point bottleneck in a conventional method and implement distributed multi-cloud backup management and recovery with cloud-chain collaboration, so that security and availability of backup data are ensured.

In addition, the client 100 may further include a cloud-chain consistency collaboration module 109. The cloud-chain consistency collaboration module 109 is configured to define a backup storage transaction, a backup update transaction (for example, a backup incremental update transaction), or a backup deletion transaction, and ensure consistency of backup storage, backup update, and backup deletion based on a transaction consistency protocol.

Based on the data management system 10 shown in FIG. 1, this application further provides a data management method. The following describes the data management method in this application with reference to embodiments.

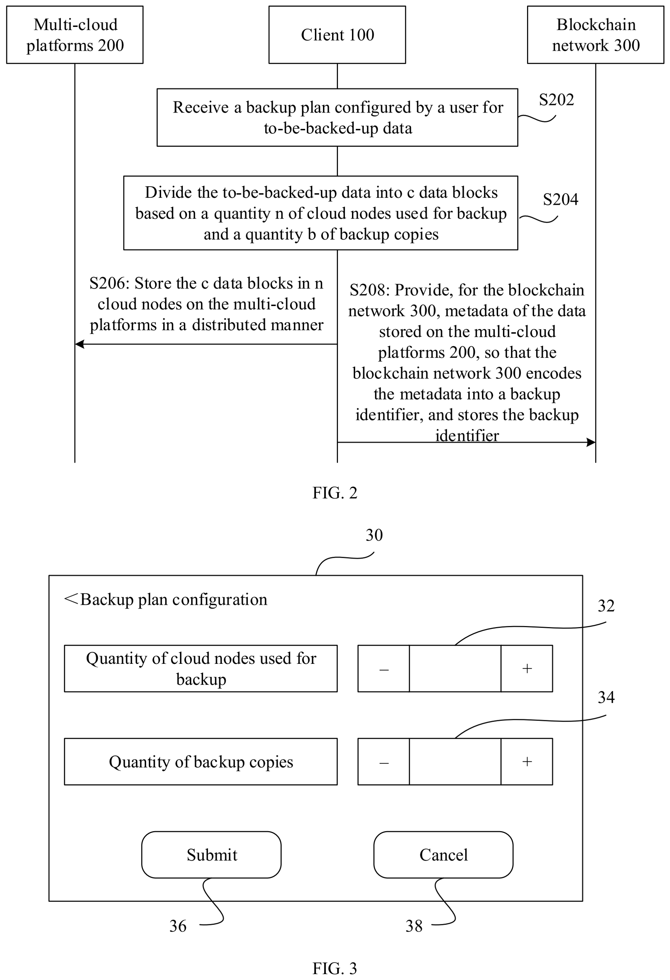

FIG. 2 is a flowchart of a data management method. The method is applied to a data management system 10. The data management system 10 includes a client 100, multi-cloud platforms 200, and a blockchain network 300. The data management system 10 is configured to manage data on the multi-cloud platforms 200. The method includes the following steps.

S202: The client 100 receives a backup plan configured by a user for to-be-backed-up data.

The backup plan includes a quantity n of cloud nodes used for backup on the multi-cloud platforms and a quantity b of backup copies. Used cloud nodes may come from different cloud platforms. For example, the n used cloud nodes may come from n cloud platforms, where n is a positive integer. The quantity b of backup copies may be a positive integer, and in consideration of storage reliability, the quantity b of backup copies may be greater than 1. Usually, three-copy storage may be used. Based on this, the quantity b of backup copies may be 3.

Specifically, when the user triggers a backup operation, for example, the user triggers a backup operation on the selected to-be-backed-up data through a shortcut key, a voice instruction, or a menu control, the client 100 may present a backup configuration interface to the user. The backup configuration interface may be a graphical user interface (graphical user interface, GUI) or a command user interface (command user interface, CUI). The following performs description by using an example in which the backup configuration interface is a GUI. FIG. 3 is a diagram of a backup configuration interface. The backup configuration interface 30 includes a used node quantity configuration control 32 and a backup copy quantity configuration control 34. The user may configure, through the used node quantity configuration control 32, the quantity n of cloud nodes used for backup on the multi-cloud platforms, and configure, through the backup copy quantity configuration control 34, the quantity b of backup copies. The backup configuration interface 30 further bears a submit control 36 and a cancel control 38. When the user triggers the submit control 36, the configuration information may be submitted, to perform a subsequent procedure. When the user triggers the cancel control 38, configuration of the backup plan may be canceled.

S204: The client 100 divides the to-be-backed-up data into c data blocks based on the quantity n of cloud nodes used for backup and the quantity b of backup copies.

S206: The client 100 stores the c data blocks in n cloud nodes on the multi-cloud platforms in a distributed manner.

The client 100 (for example, a backup storage module of the client 100) may execute a multi-cloud backup scheduling strategy and an identifier encoding and registration method, store a plurality of backup copies of the data on the multi-cloud platforms 200 (for example, in the n cloud nodes on the multi-cloud platforms 200), encode metadata of the data into a globally unique backup identifier, and register the globally unique backup identifier with a blockchain ledger, to implement addressing, positioning, and unified management of the data stored in a distributed manner.

The multi-cloud backup scheduling strategy may include scheduling of a backup resource (the data) and scheduling of the multi-cloud platforms 200.

Scheduling of the backup resource (for example, a resource such as the to-be-backed-up data) may be: The client 100 determines, based on the backup plan configured by the user, for example, the quantity n of cloud nodes used for backup and the quantity b of backup copies, a quantity of data blocks into which the to-be-backed-up data is divided, and then generates a scheduling allocation table (also referred to as a data block allocation table) based on the quantity of data blocks into which the to-be-backed-up data is divided. The scheduling allocation table records data blocks to be stored in the n cloud nodes. Correspondingly, the client 100 may divide (split) the data into data blocks based on the quantity, and the data blocks obtained through division may be divided into a plurality of groups based on the scheduling allocation table and wait for uploading. During grouping of the data blocks based on the scheduling allocation table, the data blocks may be grouped based on storage locations (for example, the cloud nodes for storing the data blocks).

Scheduling of the multi-cloud platforms 200 may be: The blockchain network 300 (for example, a blockchain smart contract deployed in a blockchain node in the blockchain network 300) determines weights of cloud nodes on the multi-cloud platforms 200 based on status parameters of the cloud nodes, selects the n cloud nodes whose weights meet a requirement (for example, the weight is the largest or the weight is greater than a preset value) after sorting, and returns node identifiers of the cloud nodes whose weights meet the requirement.

The following separately describes scheduling of the backup resource and scheduling of the multi-cloud platforms 200 by using examples.

Scheduling of the backup resource is implemented with reference to the idea of secret splitting. Secret splitting, also known as threshold secret splitting, is specifically a robust key management scheme in cryptographic systems, and can operate securely and reliably even if some fragments are damaged. Specifically, a secret (or referred to as a key) s is divided into n parts, each part is referred to as a sub-key and is held by a participant, such that:

(1) s can be reconstructed based on sub-keys held by q or more participants; and
(2) s cannot be reconstructed based on sub-keys held by fewer than q participants.

In this case, the scheme is referred to as a (q, n) threshold secret splitting scheme, and q is referred to as a threshold.

In this example, it is assumed that the n clouds $S_1, ... S_n$ used for backup are already determined, a data file O is divided into x data blocks $P_1, P_2, \cdots, P_x$ for parallel storage, and any cloud node cannot have complete data. This may be represented as $S_i = \{P_j, P_k, \cdots, P_l\} \subsetneqq O$. The original data file can be recovered only with at least q clouds, and a constraint condition of the threshold secret splitting scheme may be abstracted as follows:

Condition 1: $\forall \forall k \geq q$, a union set of backup data block sets S on k randomly selected cloud nodes $S_m \cup S_{m+1} \cup \cdots \cup S_{m+k-1} = O$; and
Condition 2: $\forall k < q$, a union set of backup data block sets S on k randomly selected cloud nodes $S_m \cup S_{m+1} \cup \cdots \cup S_{m+k-1} \subsetneqq O$.

q is a threshold. It can be considered that when k=q-1, $S_m \cup S_{m+1} \cup \cdots \cup S_{m+k-1} \subsetneqq O$, and when k=q, $S_m \cup S_{m+1} \cup \cdots \cup S_{m+k-1} = O$.

In this case, for any data block $P_i$, a union set $S_{m+1} \cup S_{m+2} \cup \cdots \cup S_{m+q-1}$ of (q-1) sets S does not include $P_i$, and a union set $S_m \cup S_{m+1} \cup S_{m+2} \cup \cdots \cup S_{m+q-1}$ of any q sets S includes $P_i$. This means that the data block $P_i$ is allocated to specific (n-q+1) sets C. It can be learned from arbitrariness of the data block $P_i$ that each data block should have (n-q+1) backups, namely, b=n-q+1. Considering that $C_m \cup C_{m+1} \cup \cdots \cup C_{m+k-1} \subsetneqq O$ when k=q-1, there is definitely a data block $P_j$ not included in a union set of any (q-1) sets. It indicates that the quantity c of data blocks into which the to-be-backed-up data is divided is C(n, n-q+1).

Based on the foregoing derivation, it can be concluded that the original data may be divided into C(n, n-q+1) blocks if there are n clouds (or n cloud nodes) that can be used for backup, any q clouds (or q cloud nodes) can recover original data, and each data block has b backups.

Each data block may be allocated to (n-q+1) cloud nodes, and cloud nodes to which the data blocks are allocated are not completely the same. In some embodiments, the client 100 may perform allocation based on all combinations of C(n, n-q+1), to obtain a scheduling allocation table. For example, in a scenario in which n=5 and b=3, a possible allocation manner is shown in the following table:

Table 1 Scheduling allocation table

|  | $P_1$ | $P_2$ | $P_3$ | $P_4$ | $P_5$ | $P_6$ | $P_7$ | $P_8$ | $P_9$ | $P_{10}$ |
|---|---|---|---|---|---|---|---|---|---|---|
| Cloud node 1 | 1 | 1 | 1 | 1 | 1 | 1 | 0 | 0 | 0 | 0 |
| Cloud node 2 | 1 | 1 | 1 | 0 | 0 | 0 | 1 | 1 | 1 | 0 |
| Cloud node 3 | 1 | 0 | 0 | 1 | 1 | 0 | 1 | 1 | 0 | 1 |
| Cloud node 4 | 0 | 1 | 0 | 1 | 0 | 1 | 1 | 0 | 1 | 1 |
| Cloud node 5 | 0 | 0 | 1 | 0 | 1 | 1 | 0 | 1 | 0 | 1 |

Compared with a simple method in which the data block is considered as an independent file for backup, the foregoing allocation strategy can reduce a quantity of backup requests to the blockchain node, relieve pressure of computing resources in the blockchain network 300, and increase bandwidth utilization by uploading the data blocks in parallel.

In the foregoing method, the client 100 automatically calculates a quantity of data blocks that is for dividing the data, and uploads different data blocks to different cloud platforms (for example, cloud nodes on different cloud platforms) for storage. A single cloud platform cannot recover secret information (for example, the complete data). In addition, when a backup data block in any corresponding range is faulty, the data can still be completely recovered. This improves robustness of data backup. Specifically, collapse of any q cloud nodes is within a tolerance range, and does not affect the original data recoverability. In this strategy, the cloud nodes participating in backup are of completely same importance. Impact caused by collapse of a plurality of nodes is related to a quantity of collapsed nodes, and there is no special node or a node of extraordinary importance, so that a truly decentralized scheduling strategy is implemented.

Scheduling of the multi-cloud platforms 200 may be implemented through calculation of the weights of the cloud nodes on the multi-cloud platforms 200. Further, before the weights of the cloud nodes are calculated, parameter normalization may be further performed. The following describes in detail specific implementation of scheduling of the multi-cloud platforms 200.

A multi-cloud global parameter update smart contract is deployed on the blockchain node, and the status parameter of the cloud node may be uploaded to the blockchain ledger for storage and calculation. The status parameter may be stored in a form of key-value (key value, KV) pair. In some examples, a globally unique identifier (for example, a node ID) of the cloud node is used as a key, and the status parameter of the cloud node is used as a value. The status parameter of the cloud node may include a static parameter or a dynamic parameter. The static parameter includes at least one of a node bandwidth and a node cost (also referred to as a node price or a cloud storage price). The static parameter is basically fixed after a cloud service is subscribed to, and may be written into the blockchain ledger through a multi-cloud status parameter initialization contract. The dynamic parameter includes at least one of a node remaining storage capacity and node reputation information (for example, a node reputation value). In an initialization phase, the dynamic parameter may be written into the blockchain ledger based on the multi-cloud status parameter initialization contract. As the data is backed up on the multi-cloud platforms 200, a value of the dynamic parameter may be dynamically adjusted as the backup operation triggers a multi-cloud status parameter update contract. Specifically, a dynamic parameter adjustment process is defined in the multi-cloud status parameter update contract. For example, the node reputation value may be dynamically adjusted based on an audit result. A larger quantity of audit successes indicates a higher node reputation value (trustworthiness) of the cloud node, and a larger quantity of audit failures indicates a lower node reputation value (trustworthiness) of the cloud node.

In this example, if the status parameter of the cloud node $S_i$ is $y_{S_i}$, status parameters of all m cloud nodes are denoted as:

$$\vec{y} = \begin{pmatrix} y_{S_1} \\ \cdots \\ y_{S_m} \end{pmatrix}.$$

$\vec{y}$ represents a parameter vector formed by status parameters of a plurality of cloud nodes.

Standardization is performed on the parameter vector $\vec{y}$, for example, z-score standardization is performed, and the state parameters are adjusted to be in a standard normal distribution mode, so that the state parameters can properly maintain an original magnitude relationship, and can be normally processed by using a nonlinear area of a sigmoid function, and then normalized by using the sigmoid function.

For a benefit type parameter (a larger value indicates better performance, for example, the node bandwidth), a normalization manner is as follows:

$$\text{Norm}(\vec{y}) = \frac{1}{1+e^{-2 \times \frac{\vec{y} - \text{mean}(\vec{y})}{\text{std}(\vec{y})}}}.$$

For a cost type parameter (a smaller value indicates better performance, for example, the node cost), a normalization manner is as follows:

$$\text{Norm}(\vec{y}) = \frac{1}{1+e^{2 \times \frac{\vec{y} - \text{mean}(\vec{y})}{\text{std}(\vec{y})}}}.$$

mean represents a mean value, and std represents a standard deviation.

After normalization is completed, an impact coefficient of each parameter on the weight may be determined. During specific implementation, an entropy weight method may be used to adaptively adjust a parameter weight, so that a larger impact coefficient is assigned to a parameter with a larger value distribution difference without manually specifying priorities of various parameters. A calculation process is as follows.

For a normalized parameter vector $\overrightarrow{y_{N \times 1}}$, an "entropy" value of each element of the normalized parameter vector $\overrightarrow{y_{N \times 1}}$ is calculated to obtain an entropy vector. The "entropy" value of the element may be determined according to the following formula:

$$H_{\vec{y}_j} = \frac{1}{-\ln N} \sum_{j=1}^{N} p_j \ln p_j.$$

$\vec{y}_j$ represents a $j^{th}$ value of the normalized parameter vector $\overrightarrow{y_{N \times 1}}$, $p_j = \frac{\vec{y}_j}{\sum_{j=1}^{N} \vec{y}_j}$ represents a weight of a $j^{th}$ value in the parameter vector, and $H_{\vec{y}_j}$ represents an "entropy" value of the $j^{th}$ value of the normalized parameter vector.

The following may be described with reference to a difference between an "entropy" value of the parameter vector (usually a column vector) of the cloud node and a maximum value 1. It is assumed that there are a total of r types of status parameters of the cloud node, and a manner of calculating an impact coefficient $I_{\vec{y}_j}$ of the $j^{th}$ value $\vec{y}_j$ of the parameter vector of the cloud node is: $I_{\vec{y}_j} = \frac{1 - H_{\vec{y}_j}}{\sum_{j=1}^{r} \left(1 - H_{\vec{y}_j}\right)}$. Weighted summation is performed based on normalized parameters $y_{S_j,1}, \ldots, y_{S_j,r}$ of the cloud node $S_j$ and the impact coefficient $I_{\vec{y}_j}$, to calculate the weight of the cloud node: $W_{S_j} = \frac{\sum_{i=1}^{r} y_{S_j,i} \times I_{\vec{y}_j}}{\sum_{i=1}^{r} I_{\vec{y}_j}}$. The blockchain network 300 sorts the cloud nodes based on the weights, selects the n cloud nodes whose weights meet a condition (for example, a weight is the highest or a weight is greater than a preset value), and returns node IDs of the n cloud nodes whose weights meet the condition to the client 100.

In this way, the client 100 may upload, based on the scheduling allocation table, the data blocks to the cloud nodes corresponding to the node IDs for backup storage. For example, the client 100 may upload the data blocks $P_1$ to $P_6$ to a cloud node corresponding to one node ID of the N node IDs returned by the blockchain network 300 for backup storage, and upload the data blocks $P_1$ to $P_3$ and $P_7$ to $P_9$ to a cloud node corresponding to another node ID of the N node IDs returned by the blockchain network 300 for backup storage. Backup storage of another cloud node may be deduced by analogy. Details are not described herein again.

S208: The client 100 provides, for the blockchain network 300, the metadata of the data stored on the multi-cloud platforms 200, so that the blockchain network 300 encodes the metadata into a backup identifier, and stores the backup identifier.

The metadata of the data stored on the multi-cloud platforms 200 includes a data identifier (DataID) and a storage address. The storage address may include a uniform resource locator (Uniform Resource Locator, URL). Because the data is divided into a plurality of data blocks and stored on different cloud platforms in a distributed manner, the storage address may include a URL list that includes a plurality of URLs. Further, the metadata may further include a user identifier, a backup time, a quantity of backup copies, and an available cloud list. The available cloud list may include a list of cloud platforms subscribed to by the user.

During specific implementation, the client 100 may send an encoding registration request to the blockchain network 300, and the encoding registration request carries the metadata (also referred to as backup metadata) of the data stored on the multi-cloud platforms 200. Correspondingly, the blockchain network 300 may extract the backup metadata, generate the backup identifier according to an identifier encoding rule, and store the backup identifier in the blockchain ledger.

The backup identifier may include a short identifier and a long identifier. The short identifier includes the data identifier, and the long identifier includes the storage address of the data on the multi-cloud platforms. The blockchain network 300 may return the short identifier to the user. In this way, in a subsequent data query process, the blockchain network 300 may receive the short identifier provided by the user, search, based on the short identifier, for the long identifier corresponding to the short identifier, parse the long identifier to obtain the storage address of the data on the multi-cloud platforms 200, and return the storage address of the data on the multi-cloud platforms. The client 100 may download the data from the multi-cloud platforms based on the storage address.

Considering that the backup data on the multi-cloud platforms 200 may have a plurality of versions, the backup identifier may be divided into a plurality of levels, for example, two levels (also referred to as two levels), to implement version management of backup data. For ease of description, the following uses an example in which the backup identifier includes a two-level identifier for description.

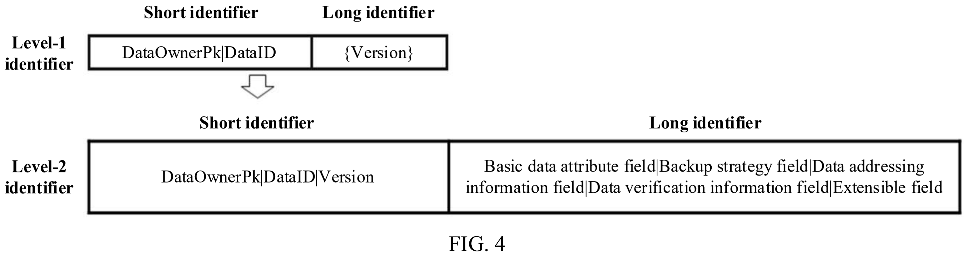

FIG. 4 is a diagram of a two-level identifier. A level-1 identifier is used to query and record a time version of backup data, and the level-1 identifier includes a short identifier (also referred to as a first short identifier) and a long identifier (also referred to as a first long identifier). The short identifier in the level-1 identifier includes the data identifier (DataID). Further, in consideration of security, the short identifier in the level-1 identifier may further include user identifier, for example, a public key DataOwnerPk of a data owner. A format of the short identifier in the level-1 identifier may be: DataOwnerPk|DataID. The long identifier in the level-1 identifier includes a version set (a version in the version set may be represented by time). A level-2 identifier is used to query and manage backup metadata of a specified version. Similarly, the level-2 identifier includes a short identifier (a second short identifier) and a long identifier (a second long identifier). The short identifier in the level-2 identifier includes the data identifier (DataID) and a target version in the version set. Further, the short identifier in the level-2 identifier may further include the user identifier. A format of the short identifier in the level-2 identifier may be: DataOwnerPk|DataID|Version, and DataOwnerPk represents a user ID of a "user registration domain", DataID represents a data identifier of the "user data domain", and Version represents a version (for example, a time version) of the backup data, and the short identifier is globally unique. The long identifier in the level-2 identifier includes a storage address of the data of the target version on the multi-cloud platforms. As shown in FIG. 2, the long identifier in the level-2 identifier is a set of backup metadata that describes the data, and the long identifier in the level-2 identifier includes: a basic data attribute field, a backup strategy field, a data addressing information field, a data verification information field, and an extensible field. The basic data attribute field describes basic information such as a size and a type of the backup data, the backup strategy field describes strategy information such as a storage period and a quantity of backup copies of the backup data, the data addressing information field describes information such as the storage address of the backup data on the multi-cloud platforms 200, the data verification information field describes information such as a hash value and a storage version of the backup data, and the extensible field is other backup information that needs to be added by a user, and may be empty.

When the user has a query requirement or a data recovery requirement, the user may initiate a query request to the blockchain network 300 by using a data identifier (DataID) and a version (Version) as parameters. Specifically, the client 100 receives the data identifier (DataID) and the version (Version) that are input by the user, and initiates the query request to the blockchain network, and the query request carries the data identifier (DataID) and the version (Version). The blockchain network 300 automatically constructs a short identifier based on the parameters carried in the query request, for example, the data identifier (DataID) and the version (Version). Then, the blockchain network 300 obtains, from the blockchain ledger based on the short identifier, a long identifier corresponding to the short identifier, and parses the long identifier to obtain a storage address (for example, a URL list) of each data block. It should be noted that the blockchain network 300 may further parse the long identifier to obtain a hash value. When a hash value, obtained through calculation, of the data block is consistent with the hash value returned by the blockchain network 300, data downloading may be performed. Further, the client may return a query result or a data recovery result to the user.

Based on the foregoing content description, according to the data management method provided in embodiments of this application, a cloud-chain convergence mechanism (a cloud-chain collaboration mechanism) in which metadata of backup data on multi-cloud platforms is encoded into a backup identifier, and the backup identifier is stored in a blockchain network is designed. The data of a plurality of time versions is recorded and managed based on backup identifiers on the chain, to support unified positioning and addressing of the backup data on the multi-cloud platforms 200, so that distributed management of multi-cloud backup data is implemented. According to this method, features of the cloud-chain convergence mechanism of being secure and reliable are used, to improve security of multi-cloud backup data and eliminate a single-point security bottleneck in a conventional method.

In addition, according to the method, an adaptive multi-cloud scheduling strategy based on a smart contract is designed. Based on a backup plan set by a user, status parameters of all available cloud nodes are extracted to calculate weights, and then cloud nodes whose weights meet a requirement are selected. Before the weight is calculated, a proper normalization function is selected to process a parameter vector, so that comparability between different parameters can be enhanced. Then, an impact coefficient of each parameter is determined according to a proper method (for example, an entropy weight method), and impact of each parameter on the weight is processed based on a difference degree of each parameter. In this way, reliability of multi-cloud scheduling calculation and flexibility of a scheduling strategy can be improved.

Data consistency may be damaged due to a network fault or deleting data by operation and maintenance personnel by mistake. To ensure that data can be successfully recovered when a disaster occurs, an automatic data consistency maintenance and verification mechanism may be further established to ensure backup data consistency. Therefore, a concept of a transaction may be further introduced in this application, and the transaction is defined as a series of operations, including backup, deletion, and an incremental update, performed on the data in the data management system. The transaction is consistent and atomic. Consistency means that the data management system should ensure execution of the transaction, so that a cloud-chain backup is transferred from one consistent state to another consistent state. Atomicity means that all cloud-chain operations in the transaction are performed or not performed. In this application, consistency and atomicity of backup, update, and deletion transactions may be implemented by using a retry and rollback mechanism.

Because transaction execution relates to three parties, including the client 100, the multi-cloud platforms 200, and the blockchain network 300, before a transaction is submitted, whether networks of the client 100, the multi-cloud platforms 200, and the blockchain network 300 are abnormal may be first checked, and then an operation task is performed. Usually, it is assumed that the cloud platform is semi-trusted, that is, a data operation instruction is correctly executed once the data operation instruction is received. Therefore, in this application, an inconsistency case mainly includes that a network of a cloud platform is abnormal in an operation of the multi-cloud platforms 200 and consequently a transaction fails to be executed.

The following describes, with reference to embodiments, operation procedures of the backup storage transaction, the backup update transaction, and the backup deletion transaction that are provided in this application.

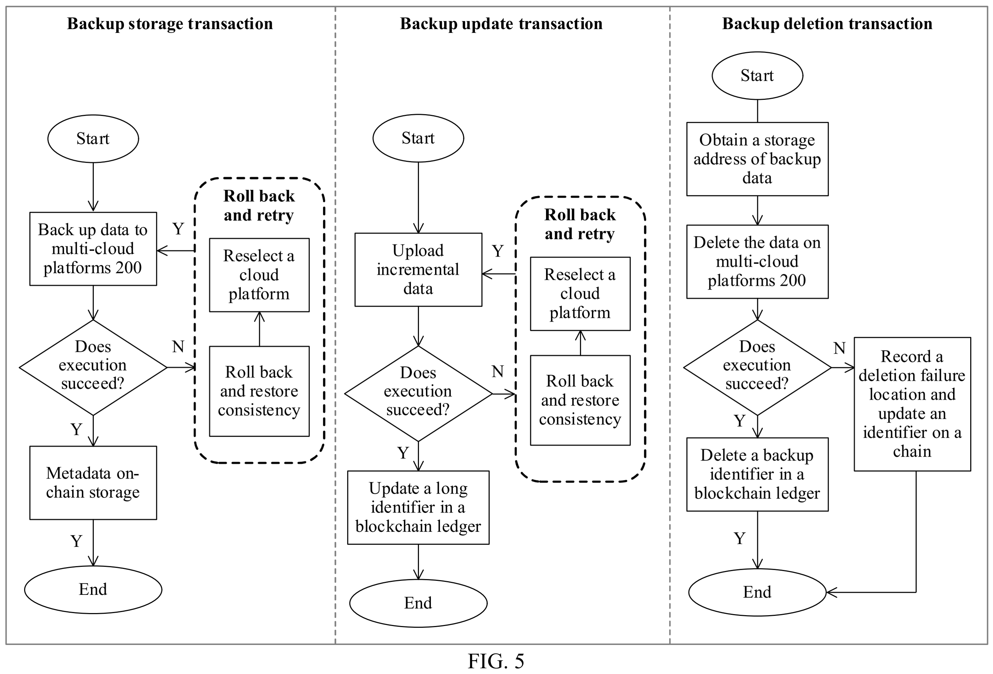

FIG. 5 is a flowchart of operations of a backup storage transaction, a backup update transaction, and a backup deletion transaction. The backup storage transaction includes the following transaction operations: (a) storing to-be-backed-up data on the multi-cloud platforms 200 based on a multi-cloud backup scheduling strategy; and (b) encoding metadata of backup data on the multi-cloud platforms 200 into a backup identifier, and storing the backup identifier in a blockchain ledger (also referred to as metadata on-chain storage). The client 100 may create the backup storage transaction, and then execute the backup storage transaction, to execute a transaction operation corresponding to the backup storage transaction. It should be noted that transaction execution relates to a plurality of participants. When executing the backup storage transaction, the client performs a transaction operation of storing c data blocks in n cloud nodes on the multi-cloud platforms 200 in a distributed manner, and provides, for the blockchain network 300, metadata of data stored on the multi-cloud platforms 200, so that the blockchain network 300 performs a transaction operation of encoding the metadata into a backup identifier and storing the backup identifier.

In a process of storing to-be-backed-up data on the multi-cloud platforms 200, when the transaction fails to be executed due to an abnormal network of a cloud platform, rollback and retry may be performed. For example, the client 100 may delete data that is already backed up from a cloud platform whose network is abnormal, and reselect a cloud platform from the multi-cloud platforms 200 for retry. For another example, the client 100 may alternatively delete all data that is already backed up in n cloud platforms (or n cloud nodes) participating in backup, and reselect n cloud platforms (or n cloud nodes) from the multi-cloud platforms 200 for retry.

Similarly, the backup update transaction (for example, a backup incremental update transaction) includes the following transaction operations: (a) storing incremental data on the multi-cloud platforms 200; and (b) updating a backup identifier in a blockchain ledger. Specifically, the client 100 may obtain incremental data, for example, receive incremental data input by a user, create a backup update transaction, and then execute the backup update transaction, to perform a transaction operation of storing the incremental data on the multi-cloud platforms and a transaction operation of updating a backup identifier. The operation of updating the backup identifier may be that the client 100 provides metadata of the incremental data, so that the blockchain network 300 performs the transaction operation of updating the backup identifier.

Similar to the backup storage transaction, in a process of storing the incremental data on the multi-cloud platforms 200, when the transaction fails to be executed due to an abnormal network of a cloud platform, rollback and retry may be performed. For example, the client 100 may delete incremental data that is already backed up from a cloud platform whose network is abnormal, and reselect a cloud platform from the multi-cloud platforms 200 for retry. For another example, the client 100 may alternatively delete all data that is already backed up on a cloud platform participating in an incremental update, and reselect, from the multi-cloud platforms 200, a cloud platform participating in the incremental update for retry.

The backup deletion transaction includes the following transaction operations: (a) deleting, from the multi-cloud platforms 200, data corresponding to a specified data identifier; and (b) deleting, from a blockchain network (for example, a blockchain ledger), a backup identifier corresponding to the specified data identifier. Specifically, the client 100 may create a backup deletion transaction in response to a deletion operation (manually triggered or automatically triggered), and then execute the backup deletion transaction, to perform a transaction operation of deleting data corresponding to a specified data identifier and a transaction operation of deleting a backup identifier corresponding to the specified data identifier. The operation of deleting the data corresponding to the specified data identifier may be that the client 100 provides the data identifier (or a short identifier), so that the multi-cloud platforms 200 delete the corresponding data. The operation of deleting the backup identifier corresponding to the specified data identifier may be that the client 100 provides the data identifier (or the short identifier), so that the blockchain network 300 deletes the corresponding backup identifier. Similar to the backup storage transaction and the backup update transaction, in a process of deleting the data corresponding to the specified data identifier from the multi-cloud platforms 200, when the transaction fails to be executed due to an abnormal network of a cloud platform, a deletion failure location may be returned, and the backup identifier in the blockchain network 300 may be updated. A user may manually check a network status of the cloud platform and try again. It should be noted that once the backup deletion transaction is submitted, deleted data cannot be recovered in a usual case.

In consideration of inconsistency caused by deleting a file or a directory by an operation and maintenance personnel of a cloud service provider by mistake after data backup is completed, in this application, a consistency verification mechanism is further designed. In the mechanism, metadata in a blockchain network is used to verify a consistency status of backup data. The consistency verification mechanism includes verifying consistency between a storage address of data on the multi-cloud platforms 200 and a storage address declared by the blockchain network 300. The storage address declared by the blockchain network 300 may be a storage address recorded in a backup identifier stored in the blockchain network 300 (for example, a blockchain ledger maintained by the blockchain network 300).

During specific implementation, the blockchain network 300 may check consistency between an actual storage address of the data on the multi-cloud platforms 200 and the storage address recorded in the backup identifier stored in the blockchain network 300. If the actual storage address of the data on the multi-cloud platforms and the storage address recorded in the backup identifier stored in the blockchain network are inconsistent, the blockchain network 300 recovers the data on the multi-cloud platforms based on the storage address recorded in the backup identifier. The blockchain network 300 may periodically check consistency between the actual storage address of the data on the multi-cloud platforms 200 and the storage address recorded in the backup identifier stored in the blockchain network 300, so that inconsistency caused by an operation of deleting by mistake can be detected in a timely manner, and recovery can be performed in a timely manner. When verifying consistency of the storage addresses, the blockchain network 300 may obtain a hash value (for example, a hash value of a file directory) of the storage address of the data on the multi-cloud platforms, invoke a consistency verification contract, and compare the hash value with a hash value in the backup identifier stored in the blockchain network 300, to verify consistency of the storage addresses.

In some possible implementations, the client 100 may alternatively submit a consistency verification request. For example, the client 100 submits the consistency verification request in response to a consistency verification operation triggered by a user. In response to the consistency verification request, the blockchain network 300 obtains the hash value (for example, the hash value of the file directory), uploaded by the multi-cloud platforms 200, of the storage address of the data, invokes the consistency verification contract, compares the hash value uploaded by the multi-cloud platforms 200 with the hash value stored in the blockchain network 300, and returns a verification transaction ID and a verification result. When the verification result is inconsistent, the client may further send a backup recovery request to recover the data from another cloud platform.

The following describes in detail management, such as an incremental update, deletion, and recovery, performed on data after backup is completed with reference to embodiments.

After data backup is completed, a user may submit an incremental update request by using the client 100. The incremental update request is used to perform an incremental update on data corresponding to a specified data identifier. The data management system 10 performs an incremental update on data on cloud and updates a backup identifier on a blockchain based on the backup update transaction. After the update is completed, the blockchain network 300 may further return a transaction ID. The following provides a description with reference to the accompanying drawings.

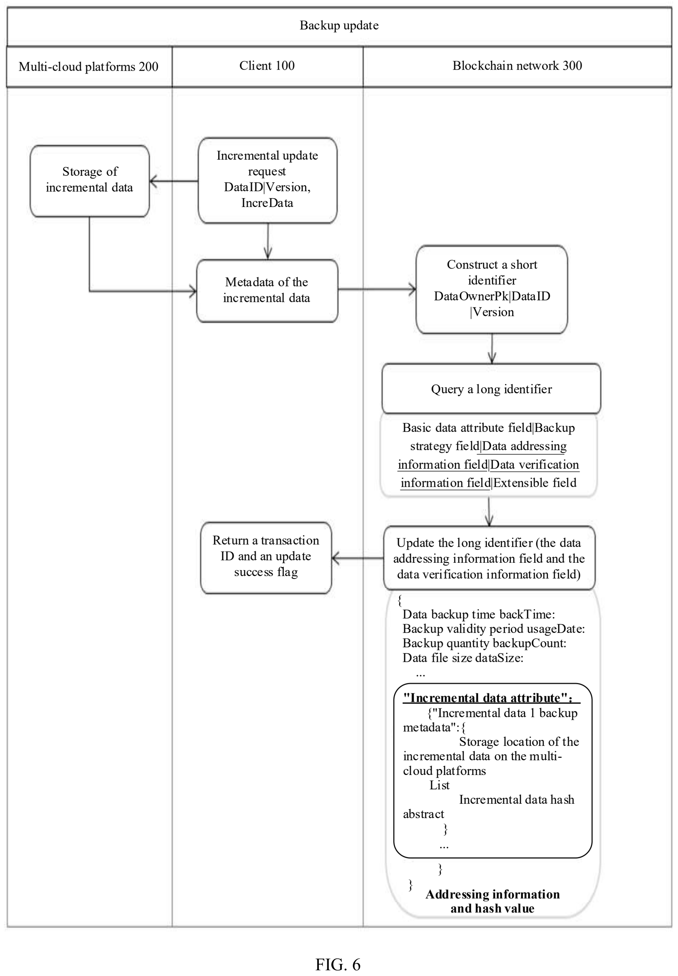

FIG. 6 is a flowchart of a data management method. The method includes the following steps:

① The client 100 submits an incremental update request.

The incremental update request is used to perform an incremental update on data. Specifically, the incremental update request carries incremental data (denoted as IncreData) and a specified data identifier (DataID). When data corresponding to the specified data identifier includes a plurality of versions, the incremental update request may further carry a version (Version). The specified data identifier and the version may be carried by using a short identifier. Based on this, the incremental update request may carry the incremental data (IncreData) and the short identifier (DataID|Version).

② The client 100 executes an incremental update transaction based on the incremental update request.

First, the client 100 may upload the incremental data used for an update to the multi-cloud platforms 200 for an incremental update, and record a storage address (for example, a URL list) of the incremental data. Further, the client 100 may further record a hash value of the incremental data. Then, the client 100 sends a transaction parameter, for example, the short identifier and metadata of the incremental data, to the blockchain network 300.

③ The blockchain network 300 performs identifier parsing, obtains a long identifier through query based on the short identifier, and updates an addressing information field in the long identifier.

Specifically, the blockchain network 300 may invoke a backup metadata management contract, query a corresponding long identifier based on a short identifier including DataOwnerPk|DataID|Version, parse the long identifier to obtain an addressing information field, and update a related field in the addressing information field. For example, the blockchain network constructs an attribute field of the incremental data based on the metadata of the incremental data, including but not limited to the storage address of the incremental data. In some possible implementations, the blockchain network 300 may further parse the long identifier to obtain a data verification information field, and update a related field of the data verification information field. For example, the blockchain network constructs the attribute field of the incremental data based on the metadata of the incremental data, including but not limited to the hash value of the incremental data.

④ The blockchain network 300 returns a transaction ID and an update success flag to the client 100.

The update success flag identifies that the incremental update is completed.

After data backup is completed, if a user has a deletion requirement, the user may further submit a backup deletion request and provide a short identifier of to-be-deleted data by using the client 100. The data management system 10 deletes, based on a backup deletion transaction, backup copies stored on the multi-cloud platforms 200 and a backup identifier stored in the blockchain network 300.

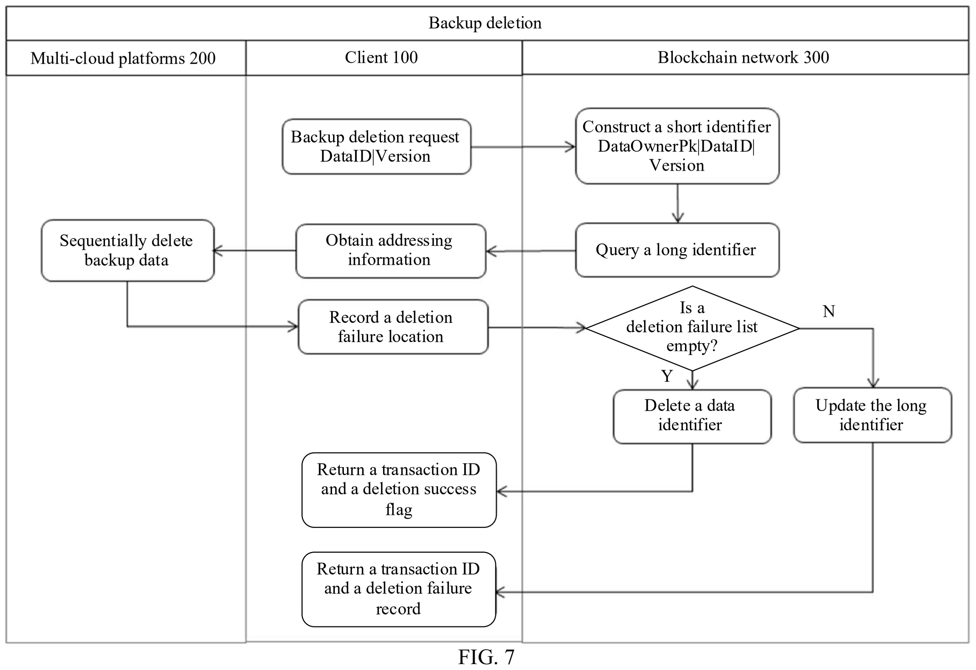

FIG. 7 is a flowchart of a data management method. The method includes the following steps.

① The client 100 submits a backup deletion request.

The backup deletion request is used to delete backup data. Specifically, the backup deletion request carries a data identifier (DataID). When data corresponding to the data identifier includes a plurality of versions, the backup deletion request may further carry a version (Version), to request to delete data of a specified version.

The data identifier or the version may be carried by using a short identifier. Based on this, the backup deletion request may carry the short identifier (DataID|Version). The backup deletion request carries a short identifier in a level-1 identifier, for example, a first short identifier DataOwnerPk|DataID, which indicates that the data of all versions and corresponding backup identifiers are requested to be deleted. The backup deletion request carries a short identifier in a level-2 identifier, for example, a second short identifier DataOwnerPk|DataID|Version, which indicates that the data of a specified version and a corresponding backup identifier are requested to be deleted.

② The client 100 executes a backup deletion transaction.

Specifically, the client 100 obtains, based on the short identifier in the backup identifier, a long identifier corresponding to the short identifier, and queries the long identifier for a storage address of the backup data, for example, obtains the storage address from an addressing information field of the long identifier. The multi-cloud platforms 200 delete the corresponding data based on the storage address in the addressing information field until the corresponding data is completely deleted. Correspondingly, the blockchain network 300 may delete the backup identifier corresponding to the data. If the deletion fails, the client 100 may further record a deletion failure location, and the blockchain network may update the long identifier in the backup identifier based on the deletion failure location.

In some possible implementations, a backup metadata management contract defines a backup metadata deletion rule. The backup metadata deletion rule may be: if a deletion failure record is empty, directly deleting the backup identifier. Further, the backup metadata deletion rule may further include: if the deletion failure record is not empty, updating, based on the deletion failure location, the long identifier corresponding to the short identifier. The blockchain network 300 may invoke the backup metadata management contract to delete or update the backup identifier.

③ When the deletion succeeds, the blockchain network 300 returns a transaction ID and a deletion success flag. When the deletion fails, the blockchain network 300 returns the transaction ID and the deletion failure record.

The deletion success flag identifies that the deletion is completed.

Considering that operation and maintenance personnel of a cloud service provider may delete data by mistake, data recovery may be further applied. When a user submits a data recovery request and provides a user identifier (for example, a user identity DataOwnerPk), a data identifier of to-be-recovered data, and an expected recovery time point, the blockchain network 300 may construct a short identifier based on the data identifier of the to-be-recovered data and the expected recovery time point, perform hierarchical parsing based on the short identifier to obtain a storage address of backup copies of the to-be-recovered data, and download the backup copies based on the storage address to recover the data. Further, the method further supports performing data verification based on a hash value, and returning a data recovery result to the user after the verification succeeds.

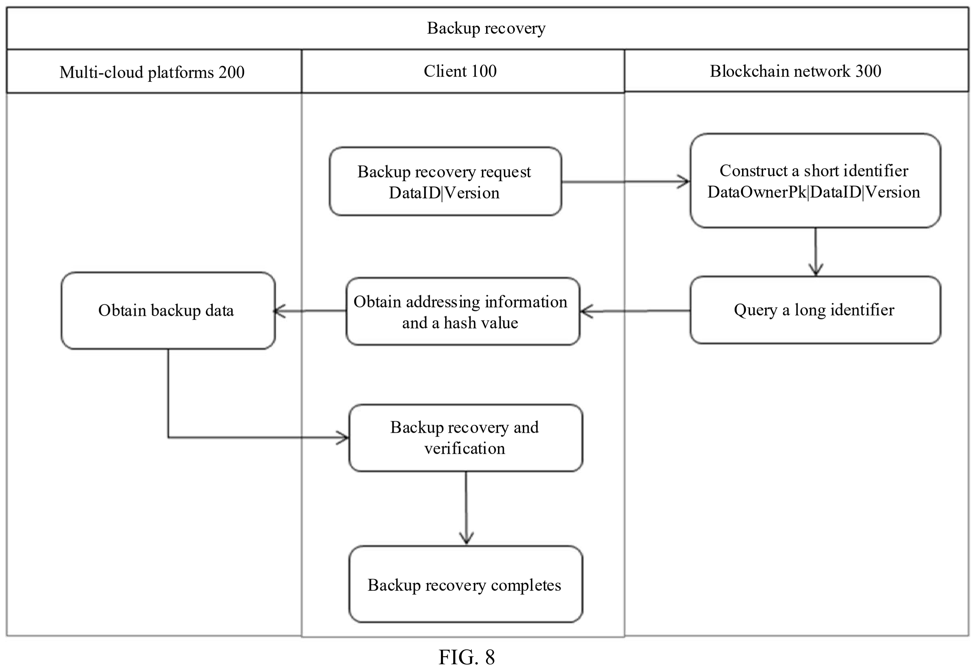

FIG. 8 is a flowchart of a data management method. The method includes the following steps.

① The client 100 submits a data recovery request.
The data recovery request carries the data identifier of to-be-recovered data. When the to-be-recovered data includes a plurality of versions (time versions), the data recovery request may further carry an expected recovery time point (time versions). In consideration of data security, the data recovery request may further carry a user identifier, to verify a user identity.
During specific implementation, a user may submit the data recovery request by using a data recovery interface, and request parameters include: the user identity, the data identifier of the to-be-recovered data, and the expected recovery time point.
② The blockchain network 300 queries a backup identifier based on the data identifier, to obtain a storage address and a hash value of the data.
Specifically, the blockchain network 300 may construct a short identifier (also referred to as a level-1 short identifier or a first short identifier) in a level-1 identifier based on the data identifier, query a corresponding level-1 long identifier based on the level-1 short identifier, to obtain a version closest to the expected recovery time point, and construct a short identifier (also referred to as a level-2 short identifier or a second short identifier) in a level-2 identifier based on the data identifier and the version. The blockchain network 300 may query a corresponding level-2 long identifier based on the level-2 short identifier. The blockchain network 300 parses the second-level long identifier to obtain the storage address (denoted as DataURLs) and the hash value (denoted as DataHashs) of the backup data on the multi-cloud platforms 200. Further, when the version closest to the expected recovery time point is a version obtained through an incremental update, the blockchain network 300 may further obtain storage locations and a hash value of incremental data by parsing the second-level long identifier.
③ The client 100 downloads the data from the multi-cloud platforms 200 based on the storage address obtained through parsing, and verifies the hash value of the data.

Specifically, the data is stored on the multi-cloud platforms 200 in a form of a plurality of data blocks in a distributed manner. When a data block $P_i$ on a first cloud platform on the multi-cloud platforms 200 is deleted by mistake, the client 100 may download, based on the storage address obtained through parsing by the blockchain network 300, the data block $P_i$ from a second cloud platform storing the data block $P_i$, and then upload the data block $P_i$ to the first cloud platform.

Further, considering a case in which the data block is tampered with or a transmission fault occurs, the client 100 may further determine a hash value of the downloaded data block $P_i$, compare the hash value with the hash value obtained through parsing by the blockchain network 300, to perform consistency verification, and then upload the data block $P_i$ to the first cloud platform when the consistency verification succeeds.

Based on the data management method in the foregoing embodiments, an embodiment of this application further provides the foregoing data management system 10. The following describes the data management system 10 with reference to the accompanying drawings.

FIG. 1 is a diagram of a structure of a data management system 10. The data management system 10 includes a client 100, multi-cloud platforms 200, and a blockchain network 300, and the data management system 10 manages data on the multi-cloud platforms 200.

The client 100 is configured to receive a backup plan configured by a user for to-be-backed-up data, where the backup plan includes a quantity n of cloud nodes used for backup on the multi-cloud platforms 200 and a quantity b of backup copies.

The client 100 is further configured to: divide the to-be-backed-up data into c data blocks based on the quantity of cloud nodes used for backup and the quantity of backup copies, and store the c data blocks in the n cloud nodes on the multi-cloud platforms 200 in a distributed manner. For at least one data block in the c data blocks, the multi-cloud platforms 200 store b backup copies of the at least one data block.

The client 100 is further configured to provide, for the blockchain network 300, metadata of the data stored on the multi-cloud platforms 200, so that the blockchain network 300 encodes the metadata into a backup identifier, and stores the backup identifier. The backup identifier is used to address the data stored on the multi-cloud platforms 200.

In some possible implementations, the backup identifier includes a short identifier and a long identifier, the short identifier includes a data identifier, the long identifier includes a storage address of the data on the multi-cloud platforms 200, and the blockchain network 300 is configured to:

receive the short identifier provided by the user; and
search, based on the short identifier, for the long identifier corresponding to the short identifier, parse the long identifier to obtain the storage address of the data on the multi-cloud platforms 200, and return the storage address of the data on the multi-cloud platforms 200.

In some possible implementations, the backup identifier includes a first short identifier, a first long identifier, a second short identifier, and a second long identifier, the first short identifier includes the data identifier, the first long identifier includes a version set, the second short identifier includes the data identifier and a target version in the version set, and the second long identifier includes a storage address of the data of the target version on the multi-cloud platforms 200.

In some possible implementations, the blockchain network 300 is further configured to:

obtain status parameters of cloud nodes on the multi-cloud platforms 200;
obtain weights of the cloud nodes on the multi-cloud platforms 200 based on the status parameters; and
return, to the client 100, node identifiers of the n cloud nodes whose weights meet a requirement.

In some possible implementations, the status parameter includes one or more of a node bandwidth, a node cost, a node remaining storage capacity, and node reputation information.

In some possible implementations, the blockchain network 300 is further configured to:

check consistency between an actual storage address of the data on the multi-cloud platforms 200 and the storage address recorded in the backup identifier stored in the blockchain network 300; and
if the actual storage address of the data on the multi-cloud platforms and the storage address recorded in the backup identifier stored in the blockchain network are inconsistent, recover the data on the multi-cloud platforms 200 based on the storage address recorded in the backup identifier.

In some possible implementations, the client 100 is further configured to:

create a backup storage transaction; and
execute the backup storage transaction, to perform the transaction operation of storing the c data blocks in the n cloud nodes on the multi-cloud platforms 200 in the distributed manner and the transaction operation of providing, for the blockchain network 300, the metadata of the data stored on the multi-cloud platforms 200.

In some possible implementations, the client 100 is further configured to:

obtain incremental data; and
create a backup update transaction, and execute the backup update transaction, to perform a transaction operation of storing the incremental data on the multi-cloud platforms 200 and a transaction operation of updating the backup identifier.

In some possible implementations, the client 100 is further configured to:

create a backup deletion transaction in response to a deletion operation; and
execute the backup deletion transaction, to perform a transaction operation of deleting data corresponding to a specified data identifier and a transaction operation of deleting a backup identifier corresponding to the specified data identifier.

In some possible implementations, a quantity of data blocks into which the to-be-backed-up data is divided is equal to C(n, n-q+1), and the client 100 is specifically configured to:

generate a scheduling allocation table based on the quantity of data blocks into which the to-be-backed-up data is divided, where the scheduling allocation table records the data blocks to be stored in the n cloud nodes; and
store the c data blocks in the n cloud nodes on the multi-cloud platforms 200 in the distributed manner based on the scheduling allocation table.

The foregoing content describes the data management system 10 provided in embodiments of this application from a perspective of hardware. The following describes the data management system 10 from a perspective of function modularization. The data management system 10 includes:

a backup storage module 102, configured to: divide the to-be-backed-up data into the c data blocks based on the quantity n of cloud nodes used for backup and the quantity b of backup copies that are configured by the user, store the c data blocks in the n cloud nodes on the multi-cloud platforms 200 in a distributed manner, and provide, for the blockchain network 300, the metadata of the data stored on the multi-cloud platforms 200, so that the blockchain network 300 encodes the metadata into the backup identifier and stores the backup identifier, where the backup identifier is used to address the data stored on the multi-cloud platforms 200;

a multi-cloud status parameter uploading module 104, configured to upload status parameters of cloud nodes on the multi-cloud platforms 200 to the blockchain network 300, so that the blockchain network 300 obtains weights of the cloud nodes on the multi-cloud platforms 200 based on the status parameters, and returns, to the client 100, identifiers of the n cloud nodes whose weights meet a requirement;

a backup addition/deletion module 106, configured to: obtain incremental data, create a backup update transaction, and execute the backup update transaction, to perform a transaction operation of storing the incremental data on the multi-cloud platforms 200 and a transaction operation of updating the backup identifier, where

the backup addition/deletion module 106 is further configured to: create a backup deletion transaction in response to a deletion operation, and execute the backup deletion transaction, to perform a transaction operation of deleting data corresponding to a specified data identifier and a transaction operation of deleting a backup identifier corresponding to the specified data identifier; and

a backup recovery module 108, configured to query, from the blockchain network 300, a storage address of the data on the multi-cloud platforms 200, to facilitate downloading the backup copies from corresponding locations on the multi-cloud platforms 200 to recover the data.

The backup storage module 102, the multi-cloud status parameter uploading module 104, the backup addition/deletion module 106, and the backup recovery module 108 may be implemented by using a hardware module or a software module. The backup storage module 102, the multi-cloud status parameter uploading module 104, the backup addition/deletion module 106, and the backup recovery module 108 may be implemented by using a computing device or a computing engine on the computing device. The following uses the backup storage module 102 as an example for description.

When being implemented by using software, the backup storage module 102 may be an application or an application module, such as a computing engine, running on a computing device or a computing device cluster. The application may be provided as a virtualization service for a user to use. The virtualization service may include a virtual machine (virtual machine, VM) service, a bare metal server (bare metal server, BMS) service, and a container (container) service. The VM service may be a service of virtualizing a virtual machine (virtual machine, VM) resource pool on a plurality of physical hosts (for example, computing devices) by using a virtualization technology, to provide a VM on demand for the user to use. The BMS service is a service of virtualizing a BMS resource pool on a plurality of physical hosts to provide a BMS on demand for the user to use. The container service is a service of virtualizing a container resource pool on a plurality of physical hosts to provide a container on demand for the user to use. The VM is a simulated virtual computer, namely, a logical computer. The BMS is an elastically scalable high-performance computing service whose computing performance is the same as that of a conventional physical machine, and has a feature of secure physical isolation. The container is a kernel virtualization technology capable of providing lightweight virtualization to isolate user spaces, processes, and resources. It should be understood that the VM service, the BMS service, and the container service in the virtualization service are merely specific examples. During actual application, the virtualization service may alternatively be another lightweight or heavyweight virtualization service. This is not specifically limited herein.

When being implemented by using hardware, the backup storage module 102 may include at least one computing device, for example, a server. Alternatively, the backup storage module 102 may be a device implemented by using an application-specific integrated circuit (application-specific integrated circuit, ASIC), a programmable logic device (programmable logic device, PLD), or the like. The PLD may be implemented by a complex programmable logic device (complex programmable logic device, CPLD), a field-programmable gate array (field-programmable gate array, FPGA), generic array logic (generic array logic, GAL), or any combination thereof.

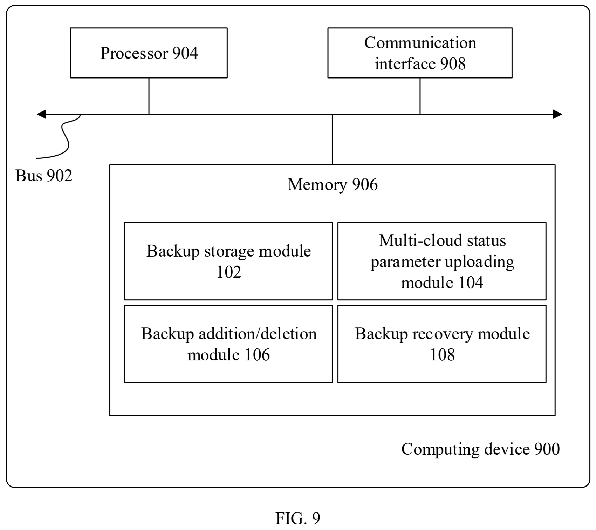

This application further provides a computing device 900. As shown in FIG. 9, the computing device 900 includes a bus 902, a processor 904, a memory 906, and a communication interface 908. The processor 904, the memory 906, and the communication interface 908 communicate with each other through the bus 902. The computing device 900 may be a server or a terminal device. It should be understood that a quantity of processors and a quantity of memories in the computing device 900 are not limited in this application.

The bus 902 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is used in FIG. 9 to represent the bus, but it does not indicate that there is only one bus or only one type of bus. The bus 902 may include a path for transferring information between components (for example, the memory 906, the processor 904, and the communication interface 908) of the computing device 900.

The processor 904 may include any one or more of processors such as a central processing unit (central processing unit, CPU), a graphics processing unit (graphics processing unit, GPU), a microprocessor (microprocessor, MP), and a digital signal processor (digital signal processor, DSP).

The memory 906 may include a volatile memory (volatile memory), for example, a random access memory (random access memory, RAM). Alternatively, the memory 906 may include a non-volatile memory (non-volatile memory), for example, a read-only memory (read-only memory, ROM), a flash memory, a hard disk drive (hard disk drive, HDD), or a solid-state drive (solid state drive, SSD). The memory 906 stores executable program code, and the processor 904 executes the executable program code to implement the foregoing data management method. Specifically, the memory 906 stores instructions used by the data management system 10 to execute the data management method.

The communication interface 908 uses a transceiver module, for example, but not limited to, a network interface card or a transceiver, to implement communication between the computing device 900 and another device or a communication network.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

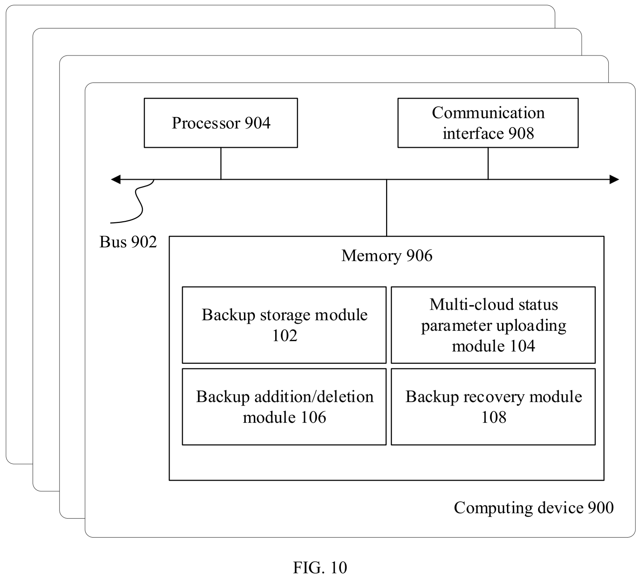

As shown in FIG. 10, the computing device cluster includes at least one computing device 900. The memory 906 in one or more computing devices 900 in the computing device cluster may store same instructions used for the data management system 10 to perform the data management method.

In some possible implementations, the one or more computing devices 900 in the computing device cluster may alternatively be configured to execute a part of the instructions used for the data management system 10 to perform the data management method. In other words, a combination of the one or more computing devices 900 may jointly execute the instructions used for the data management system 10 to perform the data management method.

It should be noted that memories 906 in different computing devices 900 in the computing device cluster may store different instructions for performing some of functions of the data management system 10.

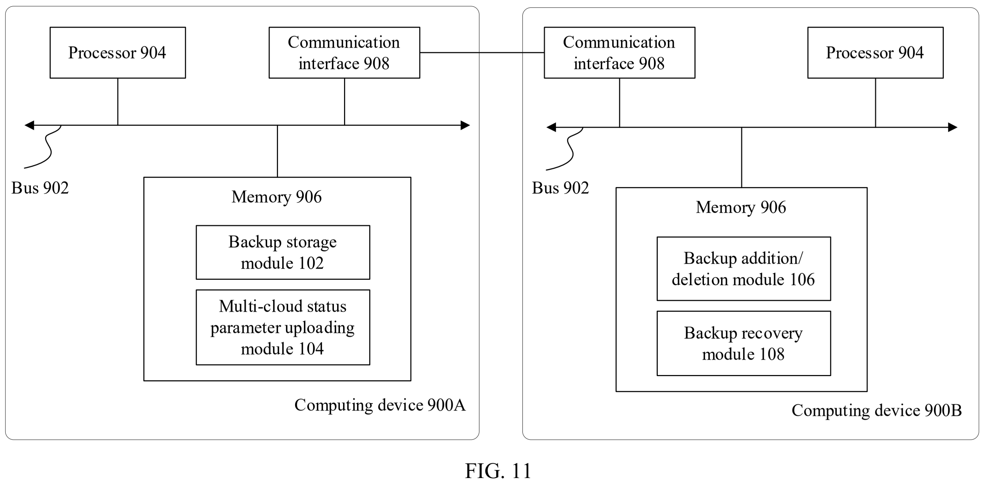

FIG. 11 shows a possible implementation. As shown in FIG. 11, two computing devices 900A and 900B are connected through the communication interface 908. A memory in the computing device 900A stores instructions for performing functions of the backup storage module 102 and the multi-cloud status parameter uploading module 104. A memory in the computing device 900B stores instructions for performing functions of the backup addition/deletion module 106 and the backup recovery module 108. In other words, the memory 906 of the computing devices 900A and 900B jointly store instructions for the data management system 10 to perform the data management method.

For a connection manner between computing device clusters shown in FIG. 11, considering that data storage and data addition, deletion, and recovery need to be performed in the data management method provided in this application, the functions implemented by the backup storage module 102 and the multi-cloud status parameter uploading module 104 are performed by the computing device 900A, and the functions implemented by the backup addition/deletion module 106 and the backup recovery module 108 are performed by the computing device 900B.

It should be understood that the functions of the computing device 900A shown in FIG. 11 may alternatively be completed by a plurality of computing devices 900. Similarly, the functions of the computing device 900B may alternatively be completed by a plurality of computing devices 900.

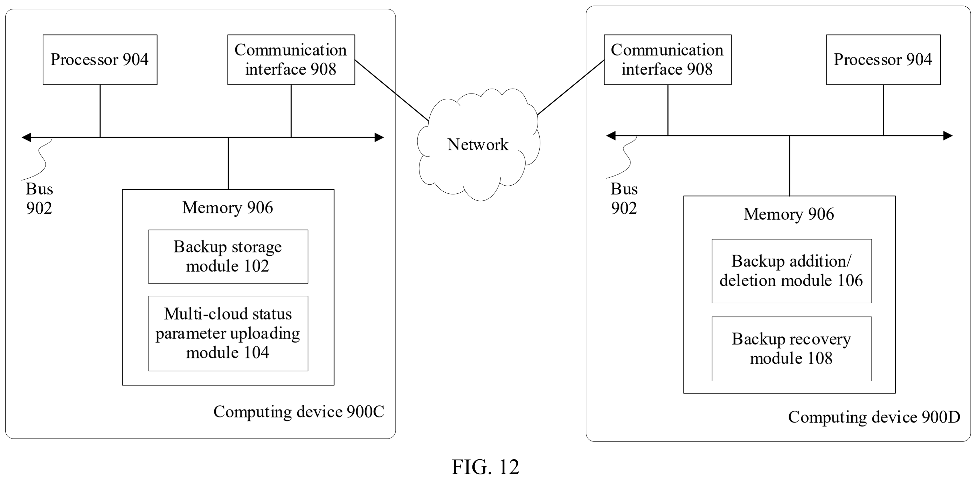

In some possible implementations, one or more computing devices in the computing device cluster may be connected through a network. The network may be a wide area network, a local area network, or the like. FIG. 12 shows a possible implementation. As shown in FIG. 12, two computing devices 900C and 900D are connected through a network. Specifically, each computing device is connected to the network through a communication interface of the computing device. In this possible implementation, the memory 906 in the computing device 900C stores instructions for performing functions of the backup storage module 102 and the multi-cloud status parameter uploading module 104. In addition, the memory 906 in the computing device 900D stores instructions for performing functions of the backup addition/deletion module 106 and the backup recovery module 108.

For a connection manner between computing device clusters shown in FIG. 12, considering that data storage and data addition, deletion, and recovery need to be performed in the data management method provided in this application, the functions implemented by the backup storage module 102 and the multi-cloud status parameter uploading module 104 are performed by the computing device 900C, and the functions implemented by the backup addition/deletion module 106 and the backup recovery module 108 are performed by the computing device 900D. It should be understood that the functions of the computing device 900C shown in FIG. 12 may alternatively be completed by a plurality of computing devices 900. Similarly, the functions of the computing device 900D may alternatively be completed by a plurality of computing devices 900.

Embodiments of this application further provide a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions instruct the computing device to perform the foregoing data management method applied to the data management system.

An embodiment of this application further provides a computer program product that includes instructions. The computer program product may be a software or a program product that includes the instructions and that can be run on a computing device or be stored in any usable medium. When the computer program product is run on at least one computing device, the at least one computing device is enabled to perform the foregoing data management method.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of the present invention.

**Claims**

1. A data management method, applied to a data management system, wherein the system comprises a client, multi-cloud platforms, and a blockchain network, the system is configured to manage data on the multi-cloud platforms, and the method comprises:

   receiving, by the client, a backup plan configured by a user for to-be-backed-up data, wherein the backup plan comprises a quantity n of cloud nodes used for backup on the multi-cloud platforms and a quantity b of backup copies;
   dividing, by the client, the to-be-backed-up data into c data blocks based on the quantity of cloud nodes used for backup and the quantity of backup copies, and storing the c data blocks in n cloud nodes on the multi-cloud platforms in a distributed manner, wherein for at least one data block in the c data blocks, the multi-cloud platforms store b backup copies of the at least one data block; and
   providing, by the client for the blockchain network, metadata of the data stored on the multi-cloud platforms, so that the blockchain network encodes the metadata into a backup identifier, and stores the backup identifier, wherein the backup identifier is used to address the data stored on the multi-cloud platforms.

2. The method according to claim 1, wherein the backup identifier comprises a short identifier and a long identifier, the short identifier comprises a data identifier, the long identifier comprises a storage address of the data on the multi-cloud platforms, and the method further comprises:

   receiving, by the blockchain network, the short identifier provided by the user; and
   searching, by the blockchain network based on the short identifier, for the long identifier corresponding to the short identifier, parsing the long identifier to obtain the storage address of the data on the multi-cloud platforms, and returning the storage address of the data on the multi-cloud platforms.

3. The method according to claim 2, wherein the backup identifier comprises a first short identifier, a first long identifier, a second short identifier, and a second long identifier, the first short identifier comprises the data identifier, the first long identifier comprises a version set, the second short identifier comprises the data identifier and a target version in the version set, and the second long identifier comprises a storage address of the data of the target version on the multi-cloud platforms.

4. The method according to any one of claims 1 to 3, wherein the method further comprises:

   obtaining, by the blockchain network, status parameters of cloud nodes on the multi-cloud platforms;
   obtaining, by the blockchain network, weights of the cloud nodes on the multi-cloud platforms based on the status parameters; and
   returning, by the blockchain network to the client, node identifiers of the n cloud nodes whose weights meet a requirement.

5. The method according to claim 4, wherein the status parameter comprises one or more of a node bandwidth, a node cost, a node remaining storage capacity, and node reputation information.

6. The method according to any one of claims 1 to 5, wherein the method further comprises:

checking, by the blockchain network, consistency between an actual storage address of the data on the multi-cloud platforms and the storage address recorded in the backup identifier stored in the blockchain network; and if the actual storage address of the data on the multi-cloud platforms and the storage address recorded in the backup identifier stored in the blockchain network are inconsistent, recovering, by the blockchain network, the data on the multi-cloud platforms based on the storage address recorded in the backup identifier.

7. The method according to any one of claims 1 to 6, wherein the method further comprises:

creating, by the client, a backup storage transaction; and executing, by the client, the backup storage transaction, to perform the transaction operation of storing the c data blocks in the n cloud nodes on the multi-cloud platforms in the distributed manner and the transaction operation of providing, for the blockchain network, the metadata of the data stored on the multi-cloud platforms.

8. The method according to any one of claims 1 to 7, wherein the method further comprises:

obtaining, by the client, incremental data; and creating, by the client, a backup update transaction, and executing the backup update transaction, to perform a transaction operation of storing the incremental data on the multi-cloud platforms and a transaction operation of updating the backup identifier.

9. The method according to any one of claims 1 to 8, wherein the method further comprises:

creating, by the client, a backup deletion transaction in response to a deletion operation; and executing, by the client, the backup deletion transaction, to perform a transaction operation of deleting data corresponding to a specified data identifier and a transaction operation of deleting a backup identifier corresponding to the specified data identifier.

10. The method according to any one of claims 1 to 9, wherein a quantity of data blocks into which the to-be-backed-up data is divided is equal to C(n, n-q+1), and storing, by the client, the c data blocks in the n cloud nodes on the multi-cloud platforms in the distributed manner comprises:

generating, by the client, a scheduling allocation table based on the quantity of data blocks into which the to-be-backed-up data is divided, wherein the scheduling allocation table records the data blocks to be stored in the n cloud nodes; and storing, by the client, the c data blocks in the n cloud nodes on the multi-cloud platforms in the distributed manner based on the scheduling allocation table.

11. A data management system, wherein the system comprises a client, multi-cloud platforms, and a blockchain network, and the system is configured to manage data on the multi-cloud platforms;

the client is configured to receive a backup plan configured by a user for to-be-backed-up data, wherein the backup plan comprises a quantity n of cloud nodes used for backup on the multi-cloud platforms and a quantity b of backup copies; the client is further configured to: divide the to-be-backed-up data into c data blocks based on the quantity of cloud nodes used for backup and the quantity of backup copies, and store the c data blocks in n cloud nodes on the multi-cloud platforms in a distributed manner, wherein for at least one data block in the c data blocks, the multi-cloud platforms store b backup copies of the at least one data block; and the client is further configured to provide, for the blockchain network, metadata of the data stored on the multi-cloud platforms, so that the blockchain network encodes the metadata into a backup identifier, and stores the backup identifier, wherein the backup identifier is used to address the data stored on the multi-cloud platforms.

12. The system according to claim 11, wherein the backup identifier comprises a short identifier and a long identifier, the short identifier comprises a data identifier, the long identifier comprises a storage address of the data on the multi-cloud platforms, and the blockchain network is configured to:

    receive the short identifier provided by the user; and
    search, based on the short identifier, for the long identifier corresponding to the short identifier, parse the long identifier to obtain the storage address of the data on the multi-cloud platforms, and return the storage address of the data on the multi-cloud platforms.

13. The system according to claim 12, wherein the backup identifier comprises a first short identifier, a first long identifier, a second short identifier, and a second long identifier, the first short identifier comprises the data identifier, the first long identifier comprises a version set, the second short identifier comprises the data identifier and a target version in the version set, and the second long identifier comprises a storage address of the data of the target version on the multi-cloud platforms.

14. The system according to any one of claims 11 to 13, wherein the blockchain network is further configured to:

    obtain status parameters of cloud nodes on the multi-cloud platforms;
    obtain weights of the cloud nodes on the multi-cloud platforms based on the status parameters; and
    return, to the client, node identifiers of the n cloud nodes whose weights meet a requirement.

15. The system according to claim 14, wherein the status parameter comprises one or more of a node bandwidth, a node cost, a node remaining storage capacity, and node reputation information.

16. The system according to any one of claims 11 to 15, wherein the blockchain network is further configured to:

    check consistency between an actual storage address of the data on the multi-cloud platforms and the storage address recorded in the backup identifier stored in the blockchain network; and
    if the actual storage address of the data on the multi-cloud platforms and the storage address recorded in the backup identifier stored in the blockchain network are inconsistent, recover the data on the multi-cloud platforms based on the storage address recorded in the backup identifier.

17. The system according to any one of claims 11 to 16, wherein the client is further configured to:

    create a backup storage transaction; and
    execute the backup storage transaction, to perform the transaction operation of storing the c data blocks in the n cloud nodes on the multi-cloud platforms in the distributed manner and the transaction operation of providing, for the blockchain network, the metadata of the data stored on the multi-cloud platforms.

18. The system according to any one of claims 11 to 17, wherein the client is further configured to:

    obtain incremental data; and
    create a backup update transaction, and execute the backup update transaction, to perform a transaction operation of storing the incremental data on the multi-cloud platforms and a transaction operation of updating the backup identifier.

19. The system according to any one of claims 11 to 18, wherein the client is further configured to:

    create a backup deletion transaction in response to a deletion operation; and
    execute the backup deletion transaction, to perform a transaction operation of deleting data corresponding to a specified data identifier and a transaction operation of deleting a backup identifier corresponding to the specified data identifier.

20. The system according to any one of claims 11 to 19, wherein a quantity of data blocks into which the to-be-backed-up data is divided is equal to $C(n, n-q+1)$, and the client is specifically configured to:

    generate a scheduling allocation table based on the quantity of data blocks into which the to-be-backed-up data is divided, wherein the scheduling allocation table records the data blocks to be stored in the n cloud nodes; and

store the c data blocks in the n cloud nodes on the multi-cloud platforms in the distributed manner based on the scheduling allocation table.

21. A computing device cluster, wherein the computing device cluster comprises at least one computing device, the at least one computing device comprises at least one processor and at least one memory, the at least one memory stores computer-readable instructions, and the at least one processor executes the computer-readable instructions, to enable the computing device cluster to perform the method according to any one of claims 1 to 10.

22. A computer-readable storage medium, comprising computer-readable instructions, wherein the computer-readable instructions are used to implement the method according to any one of claims 1 to 10.

23. A computer program product, comprising computer-readable instructions, wherein the computer-readable instructions are used to implement the method according to any one of claims 1 to 10.

FIG. 1

| Multi-cloud platforms 200 | Client 100 | Blockchain network 300 |
|---|---|---|

Receive a backup plan configured by a user for to-be-backed-up data — S202

Divide the to-be-backed-up data into c data blocks based on a quantity n of cloud nodes used for backup and a quantity b of backup copies — S204

S206: Store the c data blocks in n cloud nodes on the multi-cloud platforms in a distributed manner

S208: Provide, for the blockchain network 300, metadata of the data stored on the multi-cloud platforms 200, so that the blockchain network 300 encodes the metadata into a backup identifier, and stores the backup identifier

FIG. 2

30

＜Backup plan configuration

| Quantity of cloud nodes used for backup | − | | + | 32 |
| Quantity of backup copies | − | | + | 34 |

Submit    Cancel

36    38

FIG. 3

| Short identifier | Long identifier |
|---|---|

Level-1 identifier

| DataOwnerPk\|DataID | {Version} |
|---|---|

| Short identifier | Long identifier |
|---|---|

Level-2 identifier

| DataOwnerPk\|DataID\|Version | Basic data attribute field\|Backup strategy field\|Data addressing information field\|Data verification information field\|Extensible field |
|---|---|

FIG. 4

## Backup storage transaction

**Backup storage transaction**

( Start )

↓

Back up data to multi-cloud platforms 200

← Y ← 

**Roll back and retry**

Reselect a cloud platform

↑

Roll back and restore consistency

↓

Does execution succeed? — N →

↓ Y

Metadata on-chain storage

↓ Y

( End )

## Backup update transaction

**Backup update transaction**

( Start )

↓

Upload incremental data

← Y ←

**Roll back and retry**

Reselect a cloud platform

↑

Roll back and restore consistency

↓

Does execution succeed? — N →

↓ Y

Update a long identifier in a blockchain ledger

↓

( End )

## Backup deletion transaction

**Backup deletion transaction**

( Start )

↓

Obtain a storage address of backup data

↓

Delete the data on multi-cloud platforms 200

↓

Does execution succeed? — N →

Record a deletion failure location and update an identifier on a chain

↓ Y

Delete a backup identifier in a blockchain ledger

↓ Y

( End ) ←

FIG. 5

EP 4 697 174 A1

| Backup update | | |
|---|---|---|
| Multi-cloud platforms 200 | Client 100 | Blockchain network 300 |

Storage of incremental data

Incremental update request DataID|Version, IncreData

Metadata of the incremental data

Construct a short identifier DataOwnerPk|DataID |Version

Query a long identifier

Basic data attribute field|Backup strategy field|Data addressing information field|Data verification information field|Extensible field

Return a transaction ID and an update success flag

Update the long identifier (the data addressing information field and the data verification information field)

```
{
Data backup time backTime:
Backup validity period usageDate:
Backup quantity backupCount:
Data file size dataSize:
    ...

"Incremental data attribute":
    {"Incremental data 1 backup
metadata":{
        Storage location of the
incremental data on the multi-
cloud platforms
    List
        Incremental data hash
abstract
    }
    ...

    }
}
Addressing information
and hash value
```

FIG. 6

| Backup deletion | | |
|---|---|---|
| Multi-cloud platforms 200 | Client 100 | Blockchain network 300 |

Backup deletion request DataID|Version

Construct a short identifier DataOwnerPk|DataID| Version

Sequentially delete backup data

Obtain addressing information

Query a long identifier

Record a deletion failure location

Is a deletion failure list empty?

N

Y

Delete a data identifier

Update the long identifier

Return a transaction ID and a deletion success flag

Return a transaction ID and a deletion failure record

FIG. 7

EP 4 697 174 A1

| Backup recovery | | |
|---|---|---|
| Multi-cloud platforms 200 | Client 100 | Blockchain network 300 |

Client 100:
- Backup recovery request DataID|Version

Blockchain network 300:
- Construct a short identifier DataOwnerPk|DataID|Version
- Query a long identifier

Client 100:
- Obtain addressing information and a hash value

Multi-cloud platforms 200:
- Obtain backup data

Client 100:
- Backup recovery and verification
- Backup recovery completes

FIG. 8

EP 4 697 174 A1

| Processor 904 | | Communication interface 908 |
| --- | --- | --- |
| | Bus 902 | |
| | Memory 906 | |
| Backup storage module 102 | | Multi-cloud status parameter uploading module 104 |
| Backup addition/deletion module 106 | | Backup recovery module 108 |
| | | Computing device 900 |

FIG. 9

FIG. 10

FIG. 11

Computing device 900B

Processor 904

Communication interface 908

Memory 906

Backup addition/deletion module 106

Backup recovery module 108

Bus 902

Computing device 900A

Processor 904

Communication interface 908

Memory 906

Backup storage module 102

Multi-cloud status parameter uploading module 104

Bus 902

| Processor 904 | Communication interface 908 |
|---|---|

Bus 902

**Memory 906**

Backup storage module 102

Multi-cloud status parameter uploading module 104

Computing device 900C

Network

| Communication interface 908 | Processor 904 |
|---|---|

Bus 902

**Memory 906**

Backup addition/ deletion module 106

Backup recovery module 108

Computing device 900D

FIG. 12

## INTERNATIONAL SEARCH REPORT

| International application No. |
| --- |
| **PCT/CN2023/136149** |

### A. CLASSIFICATION OF SUBJECT MATTER

G06F 11/14(2006.01)i

According to International Patent Classification (IPC) or to both national classification and IPC

### B. FIELDS SEARCHED

Minimum documentation searched (classification system followed by classification symbols)

IPC:G06F11

Documentation searched other than minimum documentation to the extent that such documents are included in the fields searched

Electronic data base consulted during the international search (name of data base and, where practicable, search terms used)

CNTXT, ENTXTC, WPABSC, VEN, ENTXT, CNKI, Bing, IEEE: 备份, 多, 云, 数据中心, 集群, 分布式, 分割, 分块, 分片, 划分, 切分, 切割, 切块, 切片, 副本, 区块链, 寻址, backup, multi, cloud, data center, cluster, distributed, cut, partition, split, segment, divide, copy, duplicate, block chain, address

### C. DOCUMENTS CONSIDERED TO BE RELEVANT

| Category* | Citation of document, with indication, where appropriate, of the relevant passages | Relevant to claim No. |
| --- | --- | --- |
| Y | CN 108512935 A (TENCENT TECHNOLOGY (SHENZHEN) CO., LTD.; TENCENT CLOUD COMPUTING (BEIJING) CO., LTD.) 07 September 2018 (2018-09-07) description, paragraphs [0061]-[0066], and figure 4 | 1-23 |
| Y | 孙知信等 (SUN, Zhixin et al.). "区块链存储可扩展性研究进展 (Survey of Storage Scalability on Blockchain)" 软件学报 (Journal of Software), Vol. 32, No. 1, 12 January 2021 (2021-01-12), 1-20 section 2 | 1-23 |
| A | CN 108111585 A (CHENGDU LIANYI NETWORK TECHNOLOGY CO., LTD.) 01 June 2018 (2018-06-01) entire document | 1-23 |
| A | CN 110688261 A (HANGZHOU XINLIAN TECHNOLOGY CO., LTD.) 14 January 2020 (2020-01-14) entire document | 1-23 |
| A | CN 111131345 A (EMC IP HOLDING COMPANY LLC) 08 May 2020 (2020-05-08) entire document | 1-23 |

☑ Further documents are listed in the continuation of Box C.     ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **05 February 2024** | **06 February 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| | International application No. |
|---|---|
| | **PCT/CN2023/136149** |

**C. DOCUMENTS CONSIDERED TO BE RELEVANT**

| Category* | Citation of document, with indication, where appropriate, of the relevant passages | Relevant to claim No. |
|---|---|---|
| A | CN 113568785 A (SICHUAN UNIVERSITY) 29 October 2021 (2021-10-29)<br>entire document | 1-23 |
| A | CN 114528148 A (EMC IP HOLDING COMPANY LLC) 24 May 2022 (2022-05-24)<br>entire document | 1-23 |
| A | CN 114691426 A (INSPUR CLOUD INFORMATION TECHNOLOGY CO., LTD.) 01 July 2022 (2022-07-01)<br>entire document | 1-23 |
| A | US 10922304 B1 (EMC IP HOLDING COMPANY LLC) 16 February 2021 (2021-02-16)<br>entire document | 1-23 |
| A | ZHENG, Peilin et al. "Meepo: Multiple Execution Environments per Organization in Sharded Consortium Blockchain"<br>*IEEE Journal on Selected Areas in Communications,*<br>Vol. 40, No. 12, 31 December 2022 (2022-12-31), 3562-3574<br>entire document | 1-23 |
| A | LI, Jiguo et al. "Efficient Identity-Based Provable Multi-Copy Data Possession in Multi-Cloud Storage"<br>*IEEE Transactions on Cloud Computing,* Vol. 10, No. 1, 31 March 2022 (2022-03-31), 356-365<br>entire document | 1-23 |
| A | QI, Xiaodong et al. "A Reliable Storage Partition for Permissioned Blockchain"<br>*IEEE Transactions on Knowledge and Data Engineering,*<br>Vol. 33, No. 1, 01 January 2021 (2021-01-01), 14-27<br>entire document | 1-23 |

Form PCT/ISA/210 (second sheet) (July 2022)

**INTERNATIONAL SEARCH REPORT**
Information on patent family members

International application No.

**PCT/CN2023/136149**

| Patent document cited in search report | | | Publication date (day/month/year) | Patent family member(s) | | | Publication date (day/month/year) |
|---|---|---|---|---|---|---|---|
| CN | 108512935 | A | 07 September 2018 | None | | | |
| CN | 108111585 | A | 01 June 2018 | WO | 2019114097 | A1 | 20 June 2019 |
| CN | 110688261 | A | 14 January 2020 | None | | | |
| CN | 111131345 | A | 08 May 2020 | US | 2020137154 | A1 | 30 April 2020 |
| | | | | US | 11368527 | B2 | 21 June 2022 |
| CN | 113568785 | A | 29 October 2021 | None | | | |
| CN | 114528148 | A | 24 May 2022 | None | | | |
| CN | 114691426 | A | 01 July 2022 | None | | | |
| US | 10922304 | B1 | 16 February 2021 | None | | | |

Form PCT/ISA/210 (patent family annex) (July 2022)

**REFERENCES CITED IN THE DESCRIPTION**

**Patent documents cited in the description**

- CN 202310524887
- CN 202310889759